(19) Europäisches Patentamt
European Patent Office
Office européen des brevets

(11) EP 2 161 123 A1

# (12) EUROPEAN PATENT APPLICATION

(43) Date of publication:
**10.03.2010 Bulletin 2010/10**

(21) Application number: **09011266.5**

(22) Date of filing: **02.09.2009**

(51) Int Cl.:
***B32B 17/10*** *(2006.01)* ***B60J 3/00*** *(2006.01)*
***B60J 3/06*** *(2006.01)* ***G02B 5/30*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **09.09.2008 JP 2008230556**

(71) Applicant: **Fujifilm Corporation**
**Tokyo 106-8620 (JP)**

(72) Inventors:
- **Kamada, Koh**
  **Kanagawa (JP)**
- **Matsunami, Yuki**
  **Kanagawa (JP)**
- **Katagiri, Kensuke**
  **Kanagawa (JP)**
- **Agata, Yuya**
  **Kanagawa (JP)**

(74) Representative: **HOFFMANN EITLE**
**Patent- und Rechtsanwälte**
**Arabellastrasse 4**
**81925 München (DE)**

## (54) Method for producing polarizing plate, and automobile's windshield

(57) A polarizing plate including a polarizing film containing at least a polarizer, wherein the polarizing film has a main absorption axis which is polygonally or smoothly curved.

FIG. 4

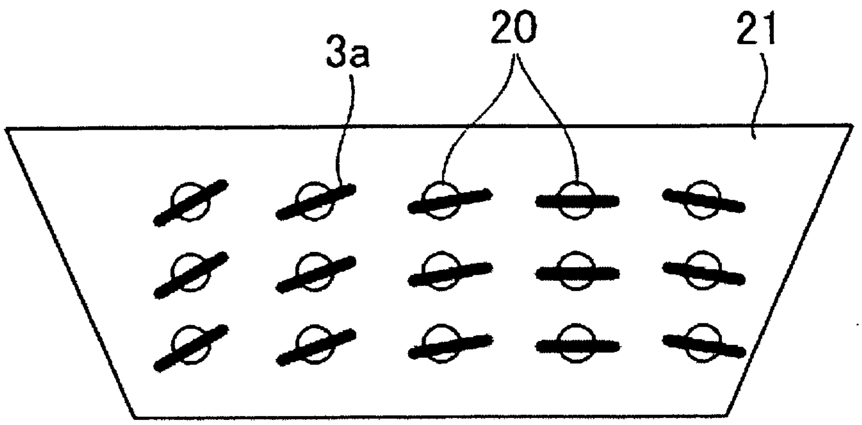


EP 2 161 123 A1

## Description

### BACKGROUND OF THE INVENTION

#### Field of the Invention

The present invention relates to a polarizing plate which realizes non-glare effects in a wide range from a region in front of the driver's sheet to that on the passenger's sheet side, to a method for producing a polarizing plate, and to an automobile's windshield.

#### Description of the Related Art

The present inventors have previously proposed a means for preventing glare from the dashboard (shadow) in some degree by applying, to an automobile's windshield, a polarizing film having horizontally oriented main absorption axes (see Japanese Patent Application Laid-Open (JP-A) No. 2007-334150).

But, in common automobiles, driver's sheets are positioned on the right-hand or left-hand side of the center of the windshields. Thus, use of the polarizing film having horizontally oriented main absorption axes as proposed in the above literature poses a problem in that anti-glare effects cannot be sufficiently obtained on the passenger's sheet side. In view of this, demand has arisen for further improvement and development.

### BRIEF SUMMARY OF THE INVENTION

The present invention solves the above existing problem and aims to achieve the following objects. Specifically, an object of the present invention is to provide a polarizing plate which realizes anti-glare effects in a wide range from a region in front of the driver's sheet to that on the passenger's sheet side; a method for producing a polarizing plate; and an automobile's windshield.

In order to solve the existing problems, the present inventors conducted extensive studies and have obtained the following findings. That is, regarding problematic glare from the dashboard (shadow) into an automobile's windshield, light which is reflected from the windshield surface to enter driver's eyes has a polarizing property. And, the electric field of its main polarization component (s-polarized light) vibrates only in a horizontal direction when only the horizontal/frontal field of driver's view is considered. But, when the whole windshield is considered, it vibrates in directions of tangents of concentric circles each having a center which is a perpendicularly intersecting point between the windshield surface and the line of driver's sight. Furthermore, glare from the dashboard (shadow) is significantly observed at a reflection angle of 50° or higher and thus, considering an area involving a necessary space for a windshield and that associated with considerable glare, an area at a reflection angle of 50° to 70° may be taken into account. The concentric arc of such a limited area is a so-called "substantially smoothly curve" having a radius of curvature varying with the type of automobile.

The present invention is accomplished on the basis of the findings obtained by the present inventors, and means for solving the existing problems are as follows.

< 1 > A polarizing plate including:

> a polarizing film containing at least a polarizer,
> wherein the polarizing film has a main absorption which is polygonally or smoothly curved.

< 2 > The polarizing plate according to < 1 > above, wherein the main absorption axis is smoothly curved in an arch shape, and has a radius of curvature of 0.5 m to 5.0 m.

< 3 > The polarizing plate according to any one of < 1 > and < 2 > above, wherein the polarizer includes a dichroic material.

< 4 > The polarizing plate according to < 3 > above, wherein the dichroic material is rod-like metal microparticles, and wherein the metal contained in each rod-like metal particle is any one of gold, silver, copper and aluminum.

< 5 > A method for producing the polarizing plate according to any one of < 1 > to < 4 > above, including:

> forming a coat film containing at least the polarizer, and
> stretching the coat film in a width direction.

< 6 > The method according to < 5 > above, wherein the main absorption axis of the polarizing film is oriented in an arch shape by a bowing phenomenon during the stretching.

< 7 > A method for producing the polarizing plate according to any one of < 1 > to < 4 > above, including:

applying a polarizing film-coating liquid containing at least a UV-curable liquid crystal compound, a photoinitiator and a polarizer onto an oriented film on a base which film has been rubbed in a polygonal or arc shape, to thereby form a coated product of the polarizing film-coating liquid,
drying the coated product to form a coat layer, and
irradiating the coat layer with UV rays while being heated to a temperature at which a liquid crystal phase develops.

< 8 > A method for producing the polarizing plate according to any one of < 1 > to < 4 > above, including:

arranging a plurality of polarizing films each having a linearly oriented main absorption axis so that the linearly oriented main absorption axes of the polarizing films are polygonally curved as a whole.

< 9 > An intermediate layer including:

the polarizing plate according to any one of < 1 > to < 4 > above, and resin layers laid on both surfaces thereof.

< 10 > An automobile's windshield, including:

a base, and
the polarizing plate according to any one of < 1 > to < 4 > above.

< 11 > The automobile's windshield according to < 10 > above, wherein the base is a laminated glass which includes two glass plates and an intermediate layer therebetween, and wherein the intermediate layer includes the polarizing plate.
< 12 > The automobile's windshield according to < 11 > above, wherein the intermediate layer is a laminate which includes the polarizing film and a resin layer.
< 13 > The automobile's windshield according to < 12 > above, wherein the resin layer includes a polyvinyl acetal resin.
< 14 > The automobile's windshield according to any one of < 10 > to < 13 > above, wherein the main absorption axis of the polarizing film is smoothly curved in an arch shape so as to be convex toward a ground.
< 15 > The automobile's windshield according to < 14 > above, wherein the main absorption axis rises from a driver's sheet side toward a passenger's sheet side.
< 16 > The automobile's windshield according to any one of < 10 > to < 15 > above, wherein an angle formed between the automobile's windshield and a horizontal reference surface is 20° to 50°.
< 17 > A method for producing an intermediate layer, the method including:

laminating one surface of the polarizing plate according to any one of < 1 > to < 4 > above on a resin layer, and laminating another resin layer on the other surface of the polarizing plate to form a laminate having the polarizing plate and the resin layers on the both surfaces thereof.

< 18 > A method for producing an automobile's windshield, the method including:

laminating one surface of the polarizing plate according to any one of < 1 > to < 4 > above on a resin layer,
laminating another resin layer on the other surface of the polarizing plate to form a laminate having the polarizing plate and the resin layers on the both surfaces thereof, and
sandwiching the laminate between two glass plates.

The present invention can provide a polarizing plate which realizes anti-glare effects in a wide range from a region in front of the driver's sheet to that on the passenger's sheet side; a method for producing a polarizing plate; and an automobile's windshield. These can solve the existing problem.

BRIEF DESCRIPTION OF THE DRAWINGS

FIG. 1 illustrates a polarizing plate on which grid points are provided.
FIG. 2 illustrates a polarizing plate whose main absorption axes are linearly oriented at grid points.

FIG. 3 illustrates a polarizing plate having a polarizing layer whose main absorption axes are polygonally curved at grid points.

FIG. 4 illustrates a polarizing plate having a polarizing layer whose main absorption axes are smoothly curved at grid points.

FIG. 5 is a geometric drawing used for describing a method in which radii of curvatures are determined from randomly selected two points A and B.

FIG. 6 is another geometric drawing used for describing a method in which radii of curvatures are determined from randomly selected two points A and B.

FIG. 7A is an explanatory view of a method of the present invention for producing a polarizing plate.

FIG. 7B illustrates a stretched film (polarizing plate) produced in the method shown in FIG. 7A.

FIG. 8A is an explanatory view of another method of the present invention for producing a polarizing plate.

FIG. 8B illustrates a stretched film (polarizing plate) produced in the method shown in FIG. 8A.

FIG. 9 illustrates a method for cutting out a polarizing plate which has smoothly curved main absorption axes and is used for an automobile's windshield.

FIG. 10 illustrates another method for cutting out a polarizing plate which has smoothly curved main absorption axes and is used for an automobile's windshield.

FIG. 11 illustrates a method for cutting out a polarizing plate which has horizontally oriented main absorption axes and is used for an automobile's windshield.

FIG. 12 illustrates a distribution of polarized light absorption axes of a polarizing plate which has smoothly curved main absorption axes and is used for an automobile's windshield, as viewed from a driver.

FIG. 13 illustrates a distribution of polarized light absorption axes of a polarizing plate which has horizontally oriented main absorption axes and is used for an automobile's windshield, as viewed from a driver.

FIG. 14 is a schematic cross-sectional view of a laminated glass.

FIG. 15 illustrates a film uniaxially stretched in Examples.

FIG. 16 illustrates orientation of main absorption axes of a polarizing plate of Example 1.

FIG. 17 illustrates orientation of main absorption axes of a polarizing plate of Comparative Example 1.

FIG. 18 is a schematic representation of devices used for evaluating a polarizing plate.

FIG. 19 illustrates a state where four polarizing plates are attached to an automobile's windshield in Example 5.

FIG. 20 illustrates a lattice-patterned paper used for evaluating the degree of glare from the dashboard (shadow).

FIG. 21 illustrates a state where a polarizing plate is attached to an automobile's windshield in Comparative Example 2.

FIG. 22 is a picture taken in Example 5 at position -22° which shows the degree of glare from the dashboard.

FIG. 23 is a picture taken in Example 5 at position 0° which shows the degree of glare from the dashboard.

FIG. 24 is a picture taken in Comparative Example 2 at position -22° which shows the degree of glare from the dashboard.

FIG. 25 is a picture taken in Comparative Example 2 at position 0° which shows the degree of glare from the dashboard.

FIG. 26A illustrates a jig for arc-motion rubbing.

FIG. 26B is an explanatory view of a method for performing arc-motion rubbing using the jig illustrated in FIG. 26A.

FIG. 27 illustrates arrangement of 6 polarizing plates on an automobile's windshield.

FIG. 28A is a schematic view of a polarizing film which has polygonally curved main absorption axes and is produced through attachment in Example 4.

FIG. 28B illustrates a method for applying the polarizing film which has polygonally curved main absorption axes and is produced through attachment in Example 4.

FIG. 29 illustrates how to cut out a polarizing film in Example 4 which has linearly oriented main absorption axes.

FIG. 30 illustrates a method for producing a polarizing film in Example 4 which has polygonally curved main absorption axes.

## DETAILED DESCRIPTION OF THE INVENTION

### (Polarizing plate)

A polarizing plate of the present invention includes a polarizing film and a support; and, if necessary, further includes other layers.

In the present invention, main absorption axes of the polarizing film virtually monotonously change in the plane, and are polygonally or smoothly curved. Preferably, the main absorption axes are smoothly curved in a substantially arch shape.

The main absorption axes of the polarizing film refer to axes by which linearly polarized light incident on the

polarizing film is absorbed to the greatest extent, and can be determined as axes which show the greatest absorbance in measurement for polarized light absorbance.

Note that a method for polygonally or smoothly curving the main absorption axes of the polarizing film of the polarizing plate is described hereinbelow.

- Method for confirming that main absorption axes of polarizing film of polarizing plate are polygonally or smoothly curved -

For example, as shown in FIG. 1, a surface of a polarizing plate 21 is equally divided so that 15 or more grid points 20 are placed thereon. The direction of a main absorption axis at each grid point 20 is plotted to indentify the shape of the main absorption axis on the windshield surface. Through this plotting, a windshield having a polarizing film whose main absorption axes 3a at grid points 20 are linearly oriented as shown in FIG. 2 can be discriminated from a polarizing plate having a polarizing film whose main absorption axes 3a at grid points 20 are polygonally curved (as shown in FIG. 3) or from a polarizing plate having a polarizing layer whose main absorption axes 3a at grid points 20 are smoothly curved (as shown in FIG. 4). In this manner, it can be determined that the main absorption axes of the polarizing film of the polarizing plate are polygonally or smoothly curved.

Also, even when the polarizing plate of the present invention is used as an automobile's windshield, similar to the above method, it can be confirmed that the main absorption axes are polygonally or smoothly curved. Here, since an automobile's windshield substantially has a slightly curved shape rather than a flat shape, when a common polarizing film whose main absorption axes are linearly oriented as shown in FIG. 2 is used, the main absorption axes are arragned in an arch shape so as to be slightly convex upward (i.e., main absorption axes 3 of a polarizing film as shown in FIG. 13). Thus, this point must be taken into account in determining that the main absorption axes of the polarizing film are polygonally or smoothly curved.

Notably, when main absorption axes of a polarizing film are polygonally curved, the number of vertices (i.e., points at which the direction (angle) of a polarized light absorption axis changes) is preferably one or more and may be two or more.

When the main absorption axis is smoothly curved in a substantially arch shape, the radius of curvature of the main absorption axis is preferably 0.5 m to 5.0 m, more preferably 1.0 m to 3.0 m. When the radius of curvature is smaller than 0.5 m, the main absorption axis forms a smaller arc, even in small automobiles, than a range in which the line of sight moves. In contrast, when the radius of curvature is greater than 5.0 m, the main absorption axis forms a larger arc, even in large automobiles, than a range in which the line of sight moves.

Here, when randomly selected two points A and B reside on concentric circles whose centers of curvatures are identical to each other, the radius of curvature can be calculated as follows.

First, as shown in FIG. 5, two points A and B on a windshield are randomly selected and distance AB is determined. Next, a polarizing plate for observation whose main absorption axis has a known direction is rotated over points A and B. During rotation of the polarizing plate, at the time when glare of the windshield is observed to the least extent, perpendicular lines to the main absorption axes of the polarizing plate for observation are determined to be main absorption axes at points A and B; i.e., $l_A$ and $l_B$. The intersection point of $l_A$ and $l_B$ refers to point C, and ∠CAB ($\theta_A$) and ∠CBA ($\theta_B$) of ΔABC are measured with a protractor. Notably, main absorption axes $l_A$ and $l_B$ are tangent lines at points A and B on circles having the center of curvature O, and are perpendicular to line segments OA and OB, respectively. Next will be described a method for determining radii of curvatures $R_A$ and $R_B$ of the circles on which points A and B reside, using distance AB, $\theta_A$ and $\theta_B$ actually measured.

First, in order to determine $R_A$, an auxiliary line is drawn which contains point A and is in parallel with tangent line $l_B$, and the intersection point of line segment OB and the auxiliary line refers to point B'.

Here, AB' // $l_B$, and therefore ∠BAB' = $\theta_B$. Also, ΔBAB' is a right triangle, and then

$$AB' = AB\cos\theta_B$$

Further, ΔOAB' is a right triangle, and then

$$AB' = R_A \sin 2\gamma$$

Therefore,

$$R_A = \frac{\cos\theta_B}{\sin 2\gamma} AB$$

Similarly, $R_B$ can be determined as follows (see FIG. 6).

$$R_B = \frac{\cos\theta_A}{\sin 2\gamma} AB$$

Here, the sum of the internal angles of $\Delta$OBA' is 180° and $\angle$OBA' = 90° - ($\theta_A$ + $\theta_B$), and then 2$\gamma$ = 180° - 90° - (90° - ($\theta_A$ + $\theta_B$)) = $\theta_A$ + $\theta_B$. Therefore, radii of curvatures $R_A$ and $R_B$ can be determined by the following Equations (1) and (2), respectively.

$$R_A = \left|\frac{\cos\theta_B}{\sin(\theta_A + \theta_B)}\right| AB \quad \cdots \text{Equation (1)}$$

$$R_B = \left|\frac{\cos\theta_A}{\sin(\theta_A + \theta_B)}\right| AB \quad \cdots \text{Equation (2)}$$

Notably, even when both points A and B reside on the same circle ($\theta_A$ = $\theta_B$), Equations (1) and (2) are satisfied. But, when $l_A$ // $l_B$, Equations (1) and (2) are not satisfied and thus, appropriate two points must be selected again.

When main absorption axes are concentrically arranged, $R_A$ and $R_B$ which are determined by Equations (1) and (2) strictly represent radii of curvatures of the circles on which points A and B reside. In addition to concentrically arranged main absorption axes, Equations (1) and (2) can be widely applied, for example, to main absorption axes oriented in a substantially arc shape, and ellipsoidally oriented main absorption axes. Also in such main absorption axes oriented in a substantially arc form and ellipsoidally oriented main absorption axes, the preferred range of $R_A$ or $R_B$ is identical to that as described above. Here, when main absorption axes are polygonally curved, $R_A$ and $R_B$ vary in the vicinity of vertices. Thus, although whether or not main absorption axes are polygonally curved can be determined using Equations (1) and (2) (i.e., utilizing the fact that when main absorption axes are not polygonally curved, denominators of Equations (1) and (2) are both zero and thus $R_A$ and $R_B$ cannot be obtained), the preferred range thereof is difficult to specify.

< Polarizing film >

The polarizing film contains at least a polarizer and a binder resin; and, if necessary, further contains other components.

- Polarizer -

The polarizer is preferably a dichroic material. The dichroic material is not particularly limited and may be

appropriately selected depending on the purpose. Examples thereof include anisotropic metal nanoparticles, carbon nanotubes, metal complexes, dichroic dyes and iodine/PVA-based materials. Of these, anisotropic metal nanoparticles are particularly preferred from the viewpoint of durability.

The anisotropic metal nanoparticles are rod-like metal microparticles each having a size of a nanometer order; i.e., several nanometers to 100 nm. Here, the rod-like metal microparticles refer to particles having an aspect ratio (major axis length/minor axis length) of 1.5 or greater.

Such anisotropic metal nanoparticles exhibit surface plasmon resonance and absorbs light of the ultraviolet to infrared region. Also, anisotropic metal nanoparticles whose minor axis length is 1 nm to 50 nm, major axis length is 10 nm to 1,000 nm, and aspect ratio is 1.5 or more can absorb light of one wavelength in a minor axis direction and light of another wavelength in a major axis direction.

Examples of the metal of the rod-like metal microparticles include gold, silver, copper, platinum, palladium, rhodium, osmium, ruthenium, iridium, iron, tin, zinc, cobalt, nickel, chromium, titanium, tantalum, tungsten, indium, aluminum and alloys thereof, with gold, silver, copper and aluminum being preferred, with gold and silver being particularly preferred.

- Binder resin -

The binder resin is not particularly limited and may be appropriately selected depending on the purpose. Examples thereof include polyvinyl alcohols, polymethacrylic acids, polyacrylic acids, polyethylene terephthalate, polyvinyl butyral, polymethyl methacrylates, polyvinyl formals, polycarbonates, cellulose butylate, polystyrens, polyvinyl chlorides, polyvinylidene chloride, polyethylene adipamides, polyvinyl acetates and copolymers thereof (e.g., vinyl chloride-vinyl acetate copolymers and styrene-methyl methacrylate copolymers). These may be used individually or in combination.

The thickness of the polarizing film is not particularly limited and may be appropriately determined depending on the purpose. Preferably, it is 10 μm to 300 μm.

< Support >

The shape, structure, size, etc. of the support are not particularly limited and may be appropriately determined depending on the purpose. The shape is, for example, a flat plate or a sheet. The structure may be appropriately selected from a single-layered structure and a laminated structure.

The material for the support is not particularly limited and is preferably inorganic or organic materials.

Examples of the inorganic materials include glass, quartz and silicon.

Examples of the organic materials include acetate resins (e.g., triacetyl cellulose (TAC)), polyester resins, polyether sulfone resins, polysulfone resins, polycarbonate resins, polyamide resins, polyimide resins, polyolefin resins, acrylic resins, polynorbornene resins, cellulose resins, polyarylate resins, polystyrene resins, polyvinyl alcohol resins, polyvinyl chloride resins, polyvinylidene chloride resins and polyacrylic resins. These may be used individually or in combination.

The support may be an appropriately synthesized product or a commercially available product.

The thickness of the support is not particularly limited and may be appropriately determined depending on the purpose. It is preferably 10 μm to 500 μm, more preferably 50 μm to 300 μm.

(Method for producing a polarizing plate)

The method of the present invention for producing the polarizing plate, in a first embodiment, includes a polarizing film forming step and a stretching step; and, if necessary, further includes other steps. Preferably, a polarizing film is formed so that its main absorption axes are oriented in a substantially arch shape by a bowing phenomenon occurring during stretching.

The method of the present invention for producing the polarizing plate, in a second embodiment, includes a coat layer forming step and a curing step; and, if necessary, further includes other steps.

The method of the present invention for producing the polarizing plate, in a third embodiment, includes a polarizing film forming step, a stretching step and a cutting/attaching step; and, if necessary, further includes other steps. In the production method according to a third embodiment, a plurality of polarizing films whose main absorption axes are linearly oriented are attached so that the main absorption axes are polygonally curved as a whole.

< Method according to first embodiment for producing polarizing plate >

- Polarizing film forming step -

The polarizing film forming step is a step of forming a polarizing film containing at least a polarizer.
The polarizing film is preferably formed by, for example, coating a support with a polarizing film forming composition.
Specifically, first, the polarizing film forming composition is prepared by dissolving or dispersing in a solvent the polarizer and the binder resin.
The solvent is not particularly limited and may be appropriately selected depending on the purpose. Examples thereof include water; alcohol solvents such as methanol, ethanol, n-propanol, isopropanol, t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; amide solvents such as dimethylformamide and dimethylacetamide; nitrile solvents such as acetonitrile and butyronitrile; ether solvents such as diethyl ether, dibutyl ether, tetrahydrofuran and dioxane; halogenated hydrocarbons such as chloroform, dichloromethane, carbon tetrachloride, dichloroethane, tetrachloroethane, methylene chloride, trichloroethylene, tetrachloroethylene, chlorobenzene and orthodichlorobenzene; phenols such as phenol, p-chlorophenol, o-chlorophenol, m-cresol, o-cresol and p-cresol; aromatic hydrocarbons such as benzene, toluene, xylene, methoxybenzene and 1,2-dimethoxybenzene; carbon bisulfide; ethyl cellosolve; and butyl cellosolve. These solvents may be used individually or in combination.
The coating method is not particularly limited and may be appropriately selected depending on the purpose. Examples thereof include spin coating, casting, roller coating, flow coating, printing, dip coating, flow casting, bar coating and gravure coating.

- Stretching -

The stretching step is a step of stretching the polarizing film in a width direction.
The polarizing film is preferably stretched under application of stress. Examples of an employable stretching method include a heat stretching method, a moisture-controlling stretching method, and a heat stretching method under moisture control, with a heat stretching method being particularly preferred.
The heating temperature in the heat stretching method is not particularly limited and may be appropriately determined depending on the purpose. Preferably, the polarizing film is preferably heated to a temperature equal to or higher than the glass transition temperature (Tg) thereof.
The stretching ratio is not particularly limited and may be appropriately determined depending on the purpose. It is preferably 1.5 to 20, more preferably 3 to 10.
In the polarizing plate of the present invention, as described above, the main absorption axes of the polarizing film are oriented in a substantially arch shape. In one preferred method for forming a polarizing film whose main absorption axes are oriented in a substantially arch shape, non-uniform stretching in a width direction (non-uniform lateral stretching) is caused between a center region and peripheral regions in the stretching step. This non-uniform stretching is generally called a bowing phenomenon. The technique for non-uniform stretching is not limited to utilization of a bowing phenomenon. For example, a laterally stretched film is pulled in a longitudinal direction by multiple-divided nip rollers (instead of a pass roller) arranged in a width direction at rates increasing from the center to the end.
Conventionally, a bowing phenomenon is attempted to be prevented from occurring during film stretching (see, for example, JP-A No. 2005-92187). In contrast, in the present invention, a bowing phenomenon is positively caused to orient main absorption axes of a polarizing film in a substantially arch shape.
The main absorption axes of the polarizing film which are oriented in a substantially arch shape preferably have a radius of curvature of 0.5 m to 5.0 m. The radius of curvature can be appropriately changed by adjusting, for example, a stretching rate, a pre-stretching, pre-heating temperature, a stretching-zone temperature, and a post-stretching relaxation zone temperature.
Specifically, in a first embodiment, a polarizing film is stretched in a width direction with symmetric tenters 1 as shown in FIG. 7A. As a result, through a bowing phenomenon, main absorption axes 3 are smoothly curved in a arch shape to be convex in a direction opposite to that in which a stretched film 2 is conveyed (see FIG. 7B). In this embodiment, symmetric main absorption axes in an arch shape can be formed.
In a second embodiment, a polarizing film is stretched in a width direction with asymmetric tenters 1 which are driven at different rates, as shown in FIG. 8A, causing a non-uniform bowing phenomenon. As a result, asymmetric main absorption axes can be oriented in an arch shape to be convex in a direction opposite to that in which a stretched film 2 is conveyed (see FIG. 8B).

< Method according to second embodiment for producing polarizing plate >

- Coat layer forming step -

The coat layer forming step is a step of forming a coat layer by applying a polarizing film-coating liquid containing at least a UV-curable liquid crystal compound, a photoinitiator and a polarizer on an oriented film on a base which film has been rubbed in a polygonal or arc shape, and then drying.

< Base >

The shape, structure, size, etc. of the base are not particularly limited and may be appropriately determined depending on the purpose. The shape is, for example, a flat plate or a sheet. The structure may be appropriately selected from a single-layered structure and a laminated structure.
The material for the base is not particularly limited and is preferably inorganic or organic materials.
Examples of the inorganic materials include glass, quartz and silicon.
Examples of the organic materials include acetate resins (e.g., triacetyl cellulose (TAC)), polyester resins, polyether sulfone resins, polysulfone resins, polycarbonate resins, polyamide resins, polyimide resins, polyolefin resins, acrylic resins, polynorbornene resins, cellulose resins, polyarylate resins, polystyrene resins, polyvinyl alcohol resins, polyvinyl chloride resins, polyvinylidene chloride resins and polyacrylic resins. These may be used individually or in combination.
The base may be an appropriately synthesized product or a commercially available product.
The thickness of the base is not particularly limited and may be appropriately determined depending on the purpose. It is preferably 10 μm to 2,000 μm, more preferably 50 μm to 500 μm.

- Oriented film -

Preferred examples of the oriented film include those which have been rubbed in a polygonal or arc shape.
The polarizer is oriented using the curable liquid crystal on the base obtained through polygonal rubbing in which the rubbing direction is changed with areas to be rubbed, to thereby form a polarizing film having polygonally curved main absorption axes.
Specifically, a base was coated with an oriented film-forming solution, followed by drying, to thereby form a film. A 30 μm-thick PVA film was attached with a piece of tape to the thus-formed film so that the half area A thereof was masked. Thereafter, the unmasked area B of the film was rubbed using a rubbing apparatus. Next, the mask was removed from area A and then area B was similarly masked. The unmasked area A was rubbed under the same conditions as area B at 20° with respect to the direction in which area B had been rubbed. Finally, the mask was removed from area B to form a polygonally rubbed oriented film.
The polarizer is oriented using the curable liquid crystal on the base obtained through arc-motion rubbing in which rubbing is performed in an arc shape, to thereby form a polarizing film having smoothly curved main absorption axes.
Specifically, a jig for arc-motion rubbing was fabricated (see FIG. 26A). First, rubbing cloth was attached with a piece of double-faced tape to a metal plate. Next, a projection was provided on the center of the other surface having no rubbing cloth, and a 3 m-long string was fixed to the projection by winding therearound. The other end of the string was wound around a pole fixed on the floor surface.
Thereafter, an oriented film-forming solution was applied on a base, followed by drying, to thereby form an oriented film. This PVA film was fixed at a distance of 1.2 m from the pole of the above-fabricated arc-motion rubbing jig, and the length of the string was adjusted to be 2 m. Then, the metal plate was made to go and return 25 times on the PVA film in an arc motion while the rubbing cloth was being pressed against the film surface (see FIG. 26B). Further, the length of the string was stepwise shortened by 10 cm to be 1.9 m, 1.8 m ... 1.2 m. In each case, the metal plate was made to go and return 25 times in an arc motion for rubbing the film surface, whereby an oriented film was formed.

- UV-curable liquid crystal compound -

The UV-curable liquid crystal compound is not particularly limited, so long as it has a polymerizable group and can be cured through application of UV rays, and may be appropriately selected depending on the purpose. Examples thereof include thermotropic liquid crystal compounds and lyotropic liquid crystal compounds. Of these, thermotropic liquid crystal compounds are particularly preferred, since they exhibit good orientation.
Non-limitative examples of the UV-curable liquid crystal compound include those having the following structural formulas.

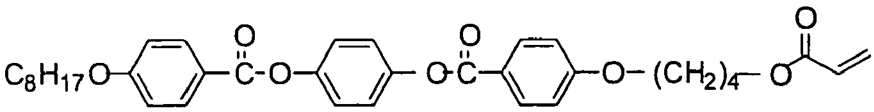

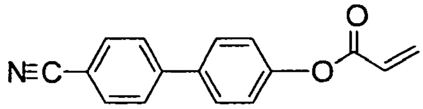

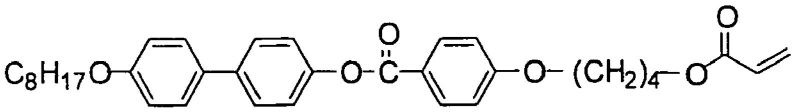

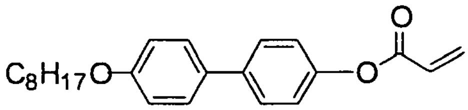

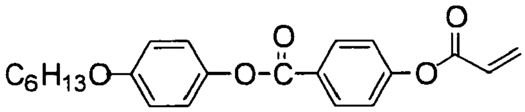

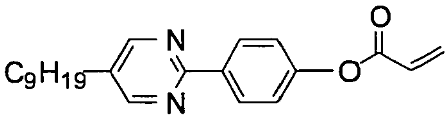

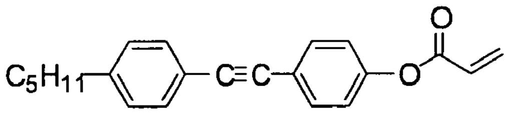

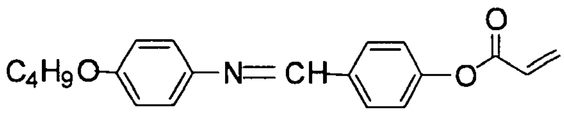

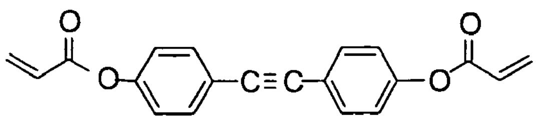

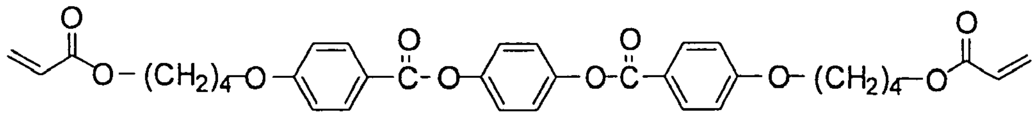

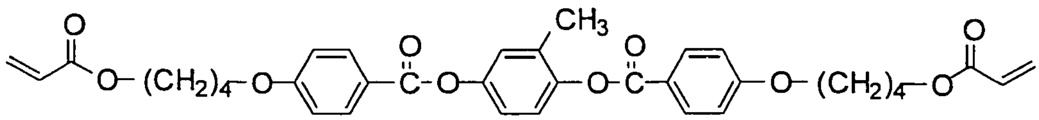

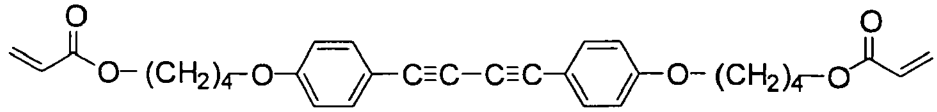

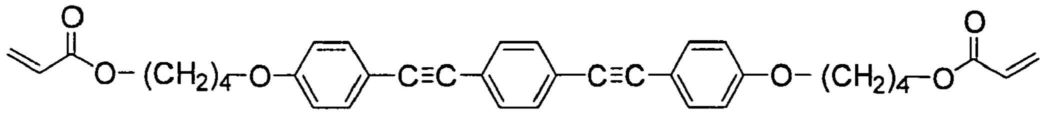

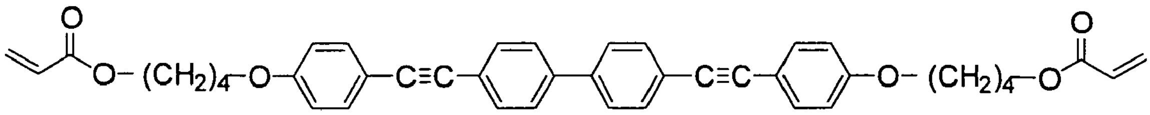

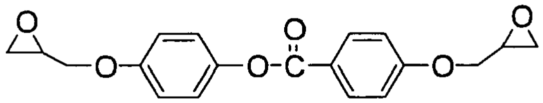

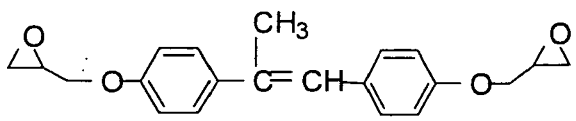

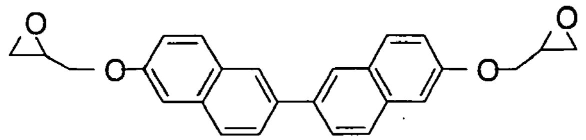

<LLC-1>

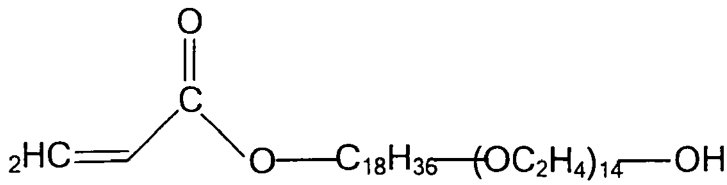

The liquid crystal compound may be an appropriately synthesized product or a commercially available product. Examples of the commercially available product include PALIOCOLOR LC242 (trade name) (product of BASF Co.); E7 (trade name) (product of Merck Co.); LC-SIlicon-CC3767 (trade name) (product of Wacker-Chem Co.); and L35, L42, L55, L59, L63, L79 and L83 (trade names) (these products are of Takasago International Corporation).

The UV-curable liquid crystal compound content is preferably 10% by mass to 99% by mass, more preferably 20% by mass to 95% by mass, on the basis of the total solid mass of the polarizing film-coating liquid.

- Photoinitiator -

As described above, the polarizing film-coating liquid contains a photoinitiator. The photoinitiator is not particularly limited and may be appropriately selected from those known in the art depending on the purpose. Examples thereof include p-methoxyphenyl-2,4-bis(trichloromethyl)-s-triazine, 2-(p-butoxystyryl)-5- trichloromethyl-1,3,4-oxadiazole, 9-phenylacrydine, 9,10-dimethylbenzphenadine, benzophenone/Michler's ketone, hexaarylbiimidazol/mercaptanbenzimidazol, benzyldimethylketal and thioxantone/amine. These may be used individually or in combination.

The photoinitiator may be a commercially available product. Examples thereof include IRGACURE 907, IRGACURE 369, IRGACURE 784 and IRGACURE 814 (trade names) (these products are of Ciba Specialty Chemicals Co.); and LUCIRIN TPO (product of BASF Co.).

The photoinitiator content is preferably 0.1% by mass to 20% by mass, more preferably 0.2% by mass to 5% by mass, on the basis of the total solid mass of the polarizing film-coating liquid.

Examples of the polarizer include metal complexes and dichroic dyes.

The polarizer content is 0.1% by mass to 50.0% by mass, more preferably 1.0% by mass to 30.0% by mass, on the basis of the total solid mass of the polarizing film-coating liquid.

- Polymer surfactant -

The polarizing film-coating liquid preferably contains a polymer surfactant. By adjusting the polymer surfactant content, an angle between the major axis of the polarizer and the base surface can be appropriately adjusted.

The polymer surfactant is preferably a nonionic surfactant. And, a polymer surfactant which strongly interacts with a liquid crystal compound used may be selected from commercially available polymer surfactants. Examples thereof include MEGAFACK F780F and B1176 (trade names) (these products are of DIC Corporation).

The polymer surfactant content is preferably 0% by mass to 15% by mass, more preferably 0% by mass to 5% by mass, on the basis of the total solid mass of the polarizing film-coating liquid.

The polarizing film-coating liquid can be prepared by, for example, dissolving or dispersing in a solvent the UV-curable liquid crystal compound, the polarizer and the photoinitiator; and, if necessary, other components. Preferably, the polymer surfactant is dissolved or dispersed together with these components.

The solvent is not particularly limited and may be appropriately selected depending on the purpose. Examples thereof include halogenated hydrocarbons such as chloroform, dichloromethane, carbon tetrachloride, dichloroethane, tetrachloroethane, methylene chloride, trichloroethylene, tetrachloroethylene, chlorobenzene and orthodichlorobenzene; phenols such as phenol, p-chlorophenol, o-chlorophenol, m-cresol, o-cresol and p-cresol; aromatic hydrocarbons such as benzene, toluene, xylene, methoxybenzene and 1,2-dimethoxybenzene; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; alcohol solvents such as t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; amide solvents such as dimethylformamide and dimethylacetamide; nitrile solvents such as acetonitrile and butyronitrile; ether solvents such as diethyl ether, dibutyl ether, tetrahydrofuran and dioxane; carbon bisulfide; ethyl cellosolve; and butyl cellosolve. These solvents may be used individually or in combination.

The polarizing film-coating liquid is applied onto an oriented film laid on the base surface to form a coat layer.

Examples of coating methods include spin coating, casting, roller coating, flow coating, printing, dip coating, flow casting, bar coating and gravure coating.

- Curing step -

The curing step is a step of curing the coat layer obtained in the coat layer forming step, by applying UV rays to the coat layer which is being heated to a temperature at which a liquid crystal phase develops.
In order that the polarizer is securely oriented, the formed coat layer is irradiated with UV rays with being heated to a temperature at which a liquid crystal phase develops.
The heating conditions are not particularly limited and may be appropriately selected depending on the purpose. The heating temperature is preferably 50°C to 120°C.
The UV ray-irradiation conditions are not particularly limited and may be appropriately selected depending on the purpose. For example, the wavelength of the UV ray to be applied is preferably 160 nm to 380 nm, more preferably 250 nm to 380 nm. The irradiation time is preferably 0.1 sec to 600 sec, more preferably 0.3 sec to 300 sec.
Examples of light sources used for UV ray irradiation include low-pressure mercury lamps (bacteriocidal lamps, fluorescent chemical lamps and black lights), high-pressure discharge lamps (high-pressure mercury lamps and metal halide lamps) and short arc discharge lamps (ultrahigh-pressure mercury lamps, xenon lamps and mercury xenon lamps).

< Method according to third embodiment for producing polarizing plate >

- Polarizing film forming step -

The polarizing film forming step is performed in accordance with that of the production method according to a first embodiment for a polarizing plate.

- Stretching step -

The stretching step is performed in the same manner as in that of the method according to a first embodiment for producing a polarizing plate, except that a polarizing film is stretched in a direction in which the film is conveyed.
Using a polarizing film obtained through stretching in a direction in which the film is conveyed; i.e., without causing a bowing phenomenon, a polarizing plate can be formed whose main absorption axes are linearly oriented uniformly in a direction in which the film is conveyed.

- Cutting/attaching step -

The polarizing plate is cut into pieces each having an appropriate size in consideration of directions of main absorption axes. In this cutting, the polarizing plate is cut so that the cut pieces each have an extra area outside an area used for an automobile's windshield and used for the piece to be temporarily attached. Here, the polarizing plate is finely divided and the thus-divided plates are attached to an automobile's windshield so that main absorption axes are polygonally curved, whereby the polygonally curved main absorption axes become closer to the greatest extent possible to main absorption axes which are oriented in an arc shape. The more the number of divided plates, the lower the production efficiency. Even when the polarizing plate is divided into 9 or more pieces and the thus-divided plates are attached to an automobile's windshield, anti-glare effects obtained is almost the same as that brought in the case where 8 pieces of the polarizing plate are attached thereto. Thus, the number of divided plates is preferably 2 to 8. FIG. 27 schematically illustrates arrangement of 6 polarizing plates in areas I to VI of an automobile's windshield.
The cut polarizing plates are arranged in optimal positions on a support and then fixed at temporarily attached areas with an adhesive. Thereafter, the thus-arranged polarizing plate is attached to a new support, or is laminated between the original support and a new support, whereby a polarizing plate in which main absorption axes are polygonally curved is formed as one piece. The support used for plate attachment/lamination is not particularly limited and may be appropriately selected depending on the purpose. Examples thereof include polyvinyl alcohols, polymethacrylic acids, polyacrylic acids, polyethylene terephthalates, polyvinyl butyrals, polymethyl methacrylates, polyvinyl formals, polycarbonates, cellulose butylate, polystyrens, polyvinyl chlorides, polyvinylidene chlorides, polyethylene adipamides, polyvinyl acetates and copolymers thereof (e.g., vinyl chloride-vinyl acetate copolymers and styrene-methyl methacrylate copolymers). These may be used individually or in combination.

- Applications, etc. -

The polarizing plate of the present invention contains a polarizing film whose main absorption axes are polygonally or smoothly curved and thus, realizes anti-glare effects in a wide range from a region in front of the driver's sheet to that in front of the passenger's sheet. The polarizing plate can be widely applied, for example, to glasses for various kinds of vehicles such as automobiles, electric trains, super express trains, airplanes and vessels.

(Intermediate layer and production method therefor)

An intermediate layer of the present invention has the polarizing plate of the present invention and resin layers provided on both surfaces of the polarizing plate.

A production method for the intermediate layer in the present invention includes a laminating step of laminating on a resin layer the polarizing plate of the present invention, and a laminate forming step of laminating another resin layer on the polarizing plate surface having no resin layer to form a laminate having resin layers on it both surfaces; and, if necessary, further includes other steps.

The intermediate layer of the present invention is more advantageous than a polarizing layer formed through coating in terms of handleability.

The intermediate layer of the present invention can preferably be used as window glasses for various kinds of vehicles such as automobiles, buses, autotrucks, electric trains, super express trains, airplanes and vessels; and additionally used in various fields, as glass for building materials such as opening and partition in buildings, for example, common houses, complex housings, office buildings, stores, community facilities and industrial plants. Among them, it is particularly preferably used as the windshield of automobiles as described below.

(Windshield of automobiles)

An automobiles' windshield of the present invention includes a base and the polarizing plate of the present invention; and, if necessary, further includes other members.

< Base >

For the base, glass (namely a glass base) is the most suitable. This is because glass has the best actual performance in that it has 12-year durability, which is the roughly-estimated service life of vehicles under environments where they are exposed to wind and rain, and in that it does not disturb its polarizing. However, recently, plastics, which have high-durability and high-isotropy and are rarely disturb their polarizing, for example norbornene polymers, are provided even in polymer plate products. Materials other than glass can also be used for the base.

- Glass base -

The glass base is not particularly limited and may be suitably selected in accordance with the intended use. Examples thereof include a single-layer glass, a laminated glass, a reinforced laminated glass, a multi-layered glass, a reinforced a multi-layered glass and a laminated multi-layered glass.

Examples of the types of plate glasses constituting such glass base include a transparent plate glass, a template glass, a wire-included plate glass, a line-included plate glass, a reinforced plate glass, a heat reflecting glass, a heat absorbing glass, a Low-E plate glass, and other various plate glasses.

The glass base may be a transparent colorless glass or a transparent colored glass as long as it is a transparent glass.

The thickness of the base glass is not particularly limited and may be suitably selected in accordance with the intended use, and, it is preferably 2 mm to 20 mm and more preferably 4 mm to 10 mm.

A plurality of plate glasses of the same type may be used, or two or more different plate glasses may be used in combination.

- Laminated glass -

The laminated glass is formed in a unit structure in which an intermediate layer is provided between two plate glasses. Such a laminated glass is widely used as windshields of vehicles such as automobiles and as windowpanes for buildings and the like because it is secure and broken pieces of glass do not fly apart even when affected by external impact. In a case of laminated glasses for automobiles, fairly thin laminated glasses have been used for the sake of weight saving. One plate glass has a thickness of about 1 mm to about 3 mm. Two glass plates are laminated via an intermediate layer having a thickness of 0.3 mm to 1 mm, to thereby form a laminated glass having a total thickness of 3 mm to 6 mm.

The two plate glasses may be suitably selected from the above-mentioned various plate glasses in accordance

with the intended use.

Examples of thermoplastic resins to be used for the intermediate layer include polyvinyl acetal resins, polyvinyl alcohol resins, polyvinyl chloride resins, saturated polyester resins, polyurethane resins, and ethylene-vinyl acetate copolymers. Of these, polyvinyl acetal resins are preferable because they allow for obtaining an intermediate layer that is excellent in a balance of various properties such as transparency, weather resistance, strength and bonding force.

The polyvinyl acetal resin is not particularly limited and may be suitably selected in accordance with the intended use. Examples thereof include polyvinyl formal resins that can be obtained by reacting polyvinyl alcohol (hereinafter may be abbreviated as PVA) with formaldehyde; narrowly defined polyvinyl acetal resins that can be obtained by reacting PVA with acetaldehyde; and polyvinyl butyral resins that can be obtained by reacting PVA with n-butylaldehyde.

PVA used for synthesis of the polyvinyl acetal resin is not particularly limited and may be suitably selected in accordance with the intended use, and PVA having an average polymerization degree of 200 to 5,000 is preferably used, and PVA having an average polymerization degree of 500 to 3,000 is more preferably used. When the average polymerization degree is less than 200, the strength of an intermediate layer formed using an obtained polyvinyl acetal resin may be excessively weak. When the average polymerization degree is more than 5,000, troubles may occur when a polyvinyl acetal resin is formed.

The polyvinyl acetal resin is not particularly limited and may be suitably selected in accordance with the intended use, and a polyvinyl acetal resin preferably has an acetalization degree of 40 mol% to 85 mol%, more preferably an acetalization degree of 50 mol% to 75 mol%. It may be difficult to synthesize a polyvinyl acetal resin having an acetalization degree less than 40 mol% or more than 85 mol% because of its reaction mechanism. The acetalization degree can be measured according to JIS K6728.

In addition to the thermoplastic resin, if necessary, the intermediate layer may contain additives such as a plasticizer, a pigment, an inorganic oxide, an inorganic nitride, an adhesiveness adjuster, a coupling agent, a surfactant, an antioxidant, a thermostabilizer, a photostabilizer, a flame retardant, an antistatic agent, a UV ray absorber, a heat-ray shielding agent, a humidity improver and a conductive material. Alternatively, a functional layer containing the additive may be laminated on the intermediate layer. Also, even if the outermost surface of the intermediate layer is embossed with the method described in, for example, JP-A No. 2007-22089, no adverse effects are given to the functional layers including the polarizing layer. Furthermore, a sound insulation property may be imparted to the intermediate layer with the method described in, for example, JP-A No. 2008-37018.

The polarizing plate of the present invention realizes anti-glare effects; i.e., reduces a visible light reflectance. Thus, in order that the effects of the present invention are intended to be obtained, the above additive preferably has a visible light weighted average transmittance of about 100%. Most of the additives actually used for an intermediate layer of a laminated glass originally exhibit their intrinsic functions as well as are designed not to absorb light of the visible light region to the greatest extent possible so as not to affect glass color tone. Thus, in the present invention, an additive used may be selected as desired from those commonly used in an intermediate layer of a laminated glass. Also, even a functional additive which will be developed in the future does not adversely affect anti-glare effects brought by the present invention, so long as it does not have a strong absorption and/or reflection characteristics with respect to visible light, and may be added to the intermediate layer. Specific examples of the additives include plasticizers, adhesive force adjusters and UV ray absorbers described in paragraphs [0042] to [0056] of Japanese Patent Application No. 2006-514110; infrared ray shielding agents described in paragraphs [0020] to [0023] of JP-A No. 2008-024538 (Japanese Patent Application No. 2006-197119) and paragraphs [0023] and [0024] of Japanese Patent Application No. 2006-531979; and humidity improvers described in paragraphs [0012] to [0018] of Japanese Patent Application No. 2006-528948.

The method of forming the intermediate layer is not particularly limited and may be suitably selected in accordance with the intended use. For example, a method is exemplified in which a composition containing a thermoplastic resin and other components is uniformly kneaded and then the kneaded product is formed into a sheet by a conventional method such as extrusion, calendering, pressing, casting and inflation.

The thickness of the intermediate layer is not particularly limited and may be suitably selected in accordance with the intended use, and it is preferably 0.3 mm to 1.6 mm.

In the present invention, the intermediate layer is an intermediate film used for a laminated glass which film is formed by laminating a plurality of films each being made of the above thermoplastic resin and/or functional resin exhibiting good adhesiveness to glass. Preferably, all or some of the films are a polarizing layer from the viewpoints of, for example, productivity and durability. Notably, the polarizing plate may also be provided one surface of a laminated glass.

The intermediate layer is preferably a laminate containing the polarizing plate. In this case, the polarizing plate of the present invention is formed in advance and then is laminated on, for example, a resin layer. The resin layer is made of, for example, thermoplastic resin. The layer structure of the laminate is not particularly limited and may be appropriately determined depending on the purpose. In addition, a UV ray absorbing layer, an infrared ray absorbing layer, etc. may be laminated.

The method for forming an intermediate layer having a laminated structure is not particularly limited and may be appropriately selected depending on the purpose. In one method, a coating liquid containing the polarizer and a binder is applied onto a resin base, followed by stretching, to thereby form a polarizing film. Then, the thus-formed polarizing film on the base (polarizing plate) is laminated on a polyvinyl acetal resin sheet. Thereafter, another polyvinyl acetal resin sheet is laminated on the other surface of the polarizing plate to form a laminate of resin layer/polarizing layer/resin layer. In this procedure, the polarizing film may be peeled off from the base after formation of the polarizing film.

The layer structure of the laminate is not particularly limited, so long as the laminate contains a polarizing layer, and may be appropriately determined depending on the purpose. The laminate may contain the aforementioned functional layers such as a UV ray absorbing layer and an infrared ray absorbing layer.

The above-exemplified method is remarkably advantageous in that (1) coating, (2) stretching and (3) laminating can be performed in a roll-to-roll manner. Thus, an intermediate layer can be produced and stored in a roll form. The roll-to-roll manner is advantageous in terms of productivity; i.e., attains continuous production unlike production of every one intermediate layer, achieving remarkably improved production speed and reduction of production cost. The state where the intermediate layer is stored is not particularly limited and may be appropriately selected depending on the purpose. In order for the intermediate layer to avoid moisture absorption, its outermost layer is preferably provided thereon with a protective film such as a gas barrier film which prevents moisture permeation. Also, when stored in a roll form, the intermediate layer is preferably wound around a core containing, for example, a desiccant to prevent the layer from moisture absorption on the core side. Most preferably, the intermediate layer is entirely packaged with, for example, a moisture-proof sheet.

The produced intermediate layer having a roll shape is appropriately cut into sheets, which may be stored or may be directly used for production of a laminated glass. The intermediate layer sheet can be appropriately cut into a piece having a size suitable for a laminated glass.

The production method of the laminated glass is not particularly limited and may be suitably selected in accordance with the intended use. For example, the laminated glass is produced by sandwiching an intermediate layer (including the polarizing plate of the present invention) between two transparent glass plates. And, the laminated glass structure is placed in a vacuum bag such as a rubber bag. Subsequently, the vacuum bag is connected to an exhaust system, and the laminated glass structure is preliminarily bonded at a temperature of 70°C to 110°C while reducing the pressure and vacuuming (degassing) so that the pressure in the vacuum bag is set to a depressurization degree of -65 kPa to -100 kPa. Thereafter, the preliminarily bonded laminated glass structure is placed in an autoclave, followed by heating/pressurizing for bonding at a temperature of 120°C to 150°C and at a pressure of 0.98 MPa to 1.47 MPa, to thereby form a laminated glass of interest.

Here, FIG. 14 is a schematic view of an exemplary laminated glass used in the present invention. A laminated glass 100 includes two glass plates 11, two intermediate layers 12 and a polarizing plate 10 of the present invention, wherein the polarizing plate 10 is interposed between the intermediate layers 12 to form a laminate of intermediate layer 12/polarizing plate 10/intermediate layer 12 (i.e., an intermediate film for a laminated glass), and the laminate is interposed between the glass plates. In FIG. 14, reference numeral 13 denotes an antireflection layer. Notably, the laminated glass 100 is disposed so that the opposite surface to the antireflection layer 13 is a light-incident surface.

Here, a plate glass of a laminated glass used for the automobile's windshield preferably has a visible light weighted average transmittance (JIS R3106) of 85% or higher but lower than 100%, more preferably 90% or higher but lower than 100%, with respect to ordinary light. Also, the visible light weighted average transmittance of the laminated glass is preferably adjusted to 70% to 85% with respect to ordinary light mainly by adjusting the polarizing layer of the intermediate layer. The visible light weighted average transmittance is more preferably nearer 70% from the viewpoint of anti-glare effects. The visible light weighted average transmittance of the laminated glass containing the polarizing layer in the present invention is measured by determining linearly-polarized light transmittances at one measurement point of the laminated glass while changing the polarizing axis of incident linearly-polarized light and then, by averaging the maximum and minimum weighted average transmittances for the linearly-polarized light. The visible light weighted average transmittance with respect to normal light is stipulated to be 70% or higher by regulations in terms of safety. Meanwhile, when the visible light weighted average transmittance is 85% or higher, anti-glare effects may not sufficiently be obtained. Also, preferably, the laminated glass has a thickness of 3 mm to 6 mm, and has at least UV-ray absorbing and heat-ray shielding properties in addition to a polarizing property. These UV-ray absorbing and heat-ray shielding properties may be imparted to an intermediate film or glass. Furthermore, more preferably, at least one surface of the laminated glass is subjected to antireflection coating.

The angle formed between an automobile's windshield and a horizontal reference level (the inclined angle of the automobile's windshield) varies with, for example, the type of automobile and cannot be generally defined. In passenger automobiles (including recreation vehicles (RVs)), the angle is preferably 20° to 50°, more preferably 25° to 40°, from the viewpoint of reducing aerodynamic drag. Here, the horizontal reference surface refers to, for example, the ground; i.e., a horizontal reference surface with respect to vehicles.

The ground refers to a horizontal ground measured with a level gauge (e.g., air bubble tube level-type gauges

and indicator level gauges).

- Antireflection film -

The antireflection film is preferably formed on both surfaces of the base or the uppermost surface on the side facing the horizontal reference surface.

The antireflection film is not particularly limited, so long as it has sufficient durability and heat resistance for practical use, and has a reflectance of 5% or lower with respect to, for example, light at an incident angle of 60°, and may be appropriately selected depending on the purpose. Examples thereof include (1) films each having fine convex/concave portions thereon, (2) two-layered films which are respectively a high-refractive-index film and a low-refractive-index film, and (3) three-layered films which are respectively a medium-refractive-index film, a high-refractive-index film and a low-refractive-index film, with (2) two-layered films and (3) three-layered films being particularly preferred.

The antireflection film may be directly formed on a glass base surface through, for example, sol-gel processing, sputtering, vapor deposition and CVD. Alternatively, the antireflection film may be formed on a transparent support through coating such as dip coating, air-knife coating, curtain coating, roller coating, wire-bar coating, gravure coating, microgravure coating and extrusion coating, and then, be made to adhere to a glass base surface.

In the present invention, the polarizing plate of the present invention is preferably incorporated in the automobile's windshield so that the main absorption axes of the polarizing film of the polarizing plate are curved so as to be convex toward the ground in the plane of the film (in a gravity direction). More preferably, the main absorption axes of the polarizing film are curved such that they rise from the driver's sheet side toward the passenger's sheet side. The polarizing plate incorporated in the above manner advantageously realizes anti-glare effects in a wide range from the region in front of the driver's sheet to that in front of the passenger's sheet.

Specifically, the polarizing plate of the present invention is incorporated in the automobile's windshield so that the main absorption axes of the polarizing film of the polarizing plate are curved so as to be convex toward the ground in the plane of the film (downward) as drawn by broken lines in FIG. 12. Also, in the curved main absorption axes which rise from the driver's sheet side toward the passenger's sheet side, the main absorption axes in front of the passenger's sheet rise by 10° to 60° in the plane than those in front of the driver's sheet.

In the method according to a first embodiment for producing the automobile's windshield of the present invention, as shown in FIG. 7A, a film is stretched with symmetric tenters 1 in a width direction, and then is cut out so as to follow an inclined automobile's windshield frame 4 as shown in FIG. 9.

In the method according to a second embodiment for producing the automobile's windshield of the present invention, as shown in FIG. 8A, a film is stretched with asymmetric tenters 1 which are driven at different rates so as to cause a bowing phenomenon, and then is cut out so as to follow a non-inclined automobile's windshield 4 as shown in FIG. 10.

In the method according to a third embodiment for producing the automobile's windshield of the present invention, several polarizing plates each containing a polarizing film whose main absorption axes are linearly oriented are attached so as to follow the shape of an automobile's windshield.

- Formation of polarizing plate having smoothly curved main absorption axes -

A PET film is provided thereon with a polarizing film-forming layer containing at least a polarizer (e.g., a metal nanorod), and then is laterally stretched with a tenter stretching apparatus so as to have a width of 0.5 m to 2 m.

Next, a polarizing film formed on the thus-stretched PET film is laminated on a polyvinyl butyral film for a laminated glass. Thereafter, as shown in FIG. 9, the polarizing film is cut out so as to follow an inclined automobile's windshield frame 4 and then, inserted into an intermediate layer for a laminated glass.

- Formation of polarizing plate having horizontally oriented main absorption axes -

A PET film is provided thereon with a polarizing film-forming layer containing at least a polarizer (e.g., a metal nanorod), and then is 5-fold longitudinally stretched at 70°C with a longitudinal stretching apparatus.

Next, a polarizing film formed on the thus-stretched PET film is laminated on a polyvinyl butyral film for a laminated glass. Thereafter, as shown in FIG. 11, the polarizing film is cut out so as to follow an automobile's windshield frame 4 and then, inserted into an intermediate layer for a laminated glass.

- Distribution of absorption axes as viewed from driver -

The absorption axes of the windshield incorporating the polarizing plate having smoothly curved main absorption axes and being formed in the above manner are viewed from a driver as indicated by broken lines of FIG. 12. That is,

the main absorption axes of the polarizing film is smoothly curved in a substantially arch shape so as to be convex toward the ground (in a gravity direction) and to rise from the driver's sheet side toward the passenger's sheet side.
Meanwhile, the absorption axes of the windshield incorporating the polarizing plate having horizontally oriented main absorption axes and being formed in the above manner are viewed from a driver as indicated by broken lines of FIG. 13. That is, the main absorption axes of the polarizing film are virtually horizontal.
In both cases, glare from the dashboard can be reduced. But, the ranges where backgroud reflections can be prevented are greately different from each other. That is, in the case of the polarizing plate having smoothly curved main absorption axes, glare can be reduced in almost all the area including an area in front of the passenger's sheet as shown in FIG. 12 as a hatched area. In contrast, in the case of the horizontally oriented polarizing plate, the range where glare can be reduced is limited to an area in front of the driver's sheet as shown in FIG. 13 as a hatched area. The reason for this lies in that light causing glare is originally problematic in an area of the windshield at a reflection angle of 50° or greater, and is s-polarized light contouring reflection angle curves. When the main absorption axes of the polarizing plate having smoothly curved main absorption axes contours the reflection angle curves as shown in FIG. 12, s-polarized light can be reduced.
When the horizontally stretched polarized plate is inserted into the automobile's windshield so that the absorption axes are horizontal, the absorption axes are oriented in an arc shape so as to be slightly convex upward as shown in FIG. 13, since a common windshield is smoothly curved. Thus, in this case, although s-polarized light of reflected light can be reduced near an area in front of a driver, it cannot be sufficiently reduced on the passenger's sheet side where s-polarized light of reflected light is gradually inclined.

- Applications, etc. -

The automobile's windshield of the present invention contains the polarizing plate of the present invention and thus, realizes anti-glare effects in a wide range from a region in front of the driver's sheet to that in front of the passenger's sheet. The automobile's windshield can be preferably used as, for example, window glasses for various kinds of vehicles such as automobiles, electric trains, super express trains, airplanes and vessels.

Examples

The present invention will next be described by way of examples, which should not be construed as limiting the present invention thereto.

(Example 1)

< Fabrication of polarizing plate having smoothly curved main absorption axes >

- Synthesis step of gold nanoparticles (seed crystals) -

A 15 mM aqueous chloroauric acid solution (product of KANTO KAGAKU K.K.) (10 mL) was added to an 80 mM aqueous CTAB (cetyltrimethylammonium bromide, product of Wako Pure Chemical Industries, Ltd.) solution (100 mL). Subsequently, a 10 mM aqueous sodium borohydride solution (20 mL) was prepared and immediately added to the above-prepared chloroauric acid-CTAB mixture. The resultant mixture was vigorously stirred to form gold nanoparticles (seed crystals).

- Gold nanorods (core nanorods) synthesizing step -

A 10 mM aqueous silver nitrate solution (100 mL), a 10 mM aqueous chloroauric acid solution (200 mL) and a 100 mM aqueous ascorbic acid solution (50 mL) were added to a 100 mM aqueous CTAB solution (1,000 mL), followed by stirring, to thereby prepare a colorless, transparent liquid. Thereafter, the above-prepared aqueous gold nanoparticles (seed crystals) solution (100 mL) was added to the resultant liquid, followed by stirring for 2 hours, to thereby prepare an aqueous gold nanorod solution.

- Silver shell forming step -

The above-prepared gold nanorod dispersion (15 mL), a 10 mM aqueous silver nitrate solution (1 mL) and a 100 mM aqueous ascorbic acid solution (1 mL) were added to a 1% by mass aqueous PVP (polyvinylpyrrolidone K30, product of Wako Pure Chemical Industries, Ltd.) solution (80 mL), followed by stirring. Subsequently, a 0.1N aqueous sodium hydroxide solution (2 mL) was added to the resultant mixture so that the pH thereof was adjusted to fall within

the alkaline region. In this manner, silver was precipitated on the surfaces of the gold nanorods to synthesize gold core-silver shell nanorods.

The thus-obtained gold core-silver shell nanorod dispersion was 10-fold concentrated through ultrafiltration with a ultrafiltration membrane (UF filter, product of Asahi Kasei Chemicals Corporation). Then, the thus-concentrated dispersion was purified until the electric conductivity reached 70 mS/m or lower, to thereby prepare a gold core-silver shell nanorod dispersion.

- Film formation -

A 10% by mass aqueous PVA124 solution (product of KURARAY CO., LTD.) (10.0 g), pure water (10.0 g), a 1% by mass aqueous boric acid solution (0.1 g) and the above-obtained metal nanorod dispersion (4.0 g) were mixed with one another through stirring, to thereby prepare a coating liquid. The thus-prepared coating liquid was applied on an A3 size clean A-PET base (PETMAX (registered trade mark), thickness: 300 μm, product of TOYOBO CO., LTD.) through bar coating with a coating bar (#80), followed by drying at room temperature for 12 hous, to thereby form a 10 μm-thick metal nanorod-containing PVA layer on an A-PET film.

- Stretching -

The metal nanorod-containing PVA layer-formed A-PET film was 3-fold uniaxially stretched under heating at 90°C while being fixed with a chuck of a stretching jig, to thereby form a film having a polarizing property. The thus-formed film was a concave film as shown in FIG. 15. The bowing phenomenon occurring in a tenter stretching apparatus is similar to this concave formation. The above-obtained film sample stretched using the stretching jig was cut out in the vicinity of the concave portion along a broken line shown in FIG. 15. Thereafter, only the polarizing layer was laminated on a glass plate to form a 500 mm-long polarizing plate whose main absorption axes were curved.

< Evaluation of polarizing plate >

The thus-obtained polarizing plate was evaluated for polarizing property. Specifically, it was evaluated for an orientation degree of metal nanorods and a distribution of polarized light absorption axes using evaluation devices arranged as shown in a schematic view of FIG. 18. First, a white light source (AQ4305, product of Yokokawa Electric Corporation) was made to emit light through an optical fiber. Then, the thus-emitted light was caused to pass through a collimate lens (product of BK-7) to be parallel light (diameter: about 8 mm). The parallel light was applied through a rotatable polarizer to the polarizing plate. The transmitted light through the polarizing plate was focused with a lens and guided to a multichannel detector (PMA-12, product of Hamamatus Photonics K.K.).

The orientation degree of metal nanorods was evaluated based on the ratio of peak intensities attributed to their major axes. Here, the peak intensities were spectroscopically measured at polarizer's rotation angles at which the major axes showed the maximum and minimum absorbances with respect to light having a maximum absorption wavelength thereof. The orientation degree of metal nanorods was calculated by the following equation, and was found to be 0.94.

$$S = \frac{A_{//} - A_{\perp}}{A_{//} + 2A_{\perp}}$$

where $A_{//}$ denotes the greatest absorbance in a polarized light absorption spectrum of a sample which spectrum is obtained by gradually changing an angle of the polarizing axis, and $A_{\perp}$ denotes an absorbance with respect to incident polarized light perpendicular to the polarizing axis at the angle at which $A_{//}$ is obtained.

Also, the distribution of polarized light absorption axes of the polarizing plate was determined using the evaluation devices shown in FIG. 18. Specifically, at measurement points, polarizer's rotation angles at which major axes of metal nanorods showed the minimum absorbance with respect to light having a maximum absorption wavelength thereof were recorded and plotted. As a result, main absorption axes 3 of the formed polarizing plate were found to be oriented in an arch shape as shown in FIG. 16, and to have a radius of curvature of 0.3 m.

Notably, in Example 1, composite metal particles composed of two different metals; i.e., gold and silver were used. Similar results were obtained even by using gold or silver particles individually. Further, iodine or other dichroic

dyes could be employed as a dichroic material.

(Example 2)

< Polygonal orientation of liquid crystal and dichroic polarizer through polygonal rubbing >

- Formation of oriented film -

An oriented film-forming polyvinyl alcohol (PVA) solution (methanol solution) was applied through bar coating on a clean triacetyl cellulose (TAC) film (thickness: 100 μm, product of FUJIFILM Corporation), followed by drying at 100°C for 3 min, to thereby form a 1.0 μm-thick PVA film. Subsequently, a 30 μm-thick PVA film was attached with a piece of tape to the thus-formed PVA film so that the half area A thereof was masked. Thereafter, the unmasked area B of the PVA film was rubbed twice using a rubbing apparatus (1,000 rpm, rubbing depth: 0.35 mm) (product of JOYO ENGINEERING CO., LTD.). Next, the mask was removed from the area A and then area B was similarly masked. The unmasked area A was rubbed twice under the same conditions as area B at 20° with respect to the direction in which area B had been rubbed. Finally, the mask was removed from area B to form a PVA oriented film.

- Preparation of polarizing film-coating liquid -

A liquid crystal compound having a photopolymerizable group (product of BASF Co., trade name: PALIOCOLOR LC242) (9.12 g) was dissolved in methyl ethyl ketone (MEK) (15.21 g). Subsequently, an initiator solution (3.33 g), which had been prepared by dissolving IRGACURE 907 (2.70 g) (product of Ciba Specialty Chemicals Co.) and KAYACURE DETX (0.90 g) (product of NIPPON KAYAKU Co., Ltd.) in MEK (26.4 g), was added to the above-prepared liquid crystal solution, and the mixture was stirred for 5 min for complete dissolution.

Subsequently, a dichroic dye (79.5 mg) (G207, product of HAYASHIBARA BIOCHEMICAL LABS., INC.) and toluene (3.9 g) were added to the thus-obtained solution, followed by stirring for 10 min, to thereby prepare a polarizing film-coating liquid.

- Orientation and curing of dichroic dye -

The obtained polarizing film-coating liquid was applied through bar coating on the above-formed PVA oriented film, followed by heating at 90°C for 1 min.
While being heated, the PVA film was irradiated with UV rays (high-pressure mercury lamp, 1 kW, 330 mJ/mm$^2$), to thereby form a polarizing film (having a polygonally curved main absorption axes).

(Example 3)

< Arc-shape orientation of liquid crystal and dichroic polarizer through arc-motion rubbing >

The procedure of Example 2 was repeated, except that a PVA oriented film was formed with the below-described method, to thereby form a polarizing film (having main absorption axes oriented in an arc shape).

- Jig for arc-motion rubbing -

First, a jig for arc-motion rubbing was fabricated (see FIG. 26A). Specifically, rubbing cloth was attached with a piece of double-faced tape to a metal plate (length: 20 cm, width: 3 cm, weight: 500 g). Next, a projection was provided on the center of the other surface having no rubbing cloth, and a 3 m-long string was fixed on the projection by winding therearound. The other end of the string was wound around a pole fixed on the floor surface.

- Formation of oriented film -

An oriented film-forming polyvinyl alcohol (PVA) solution (methanol solution) was applied through bar coating on a clean triacetyl cellulose (TAC) film (thickness: 100 μm, product of FUJIFILM Corporation), followed by drying at 100°C for 3 min, to thereby form a 1.0 μm-thick PVA film. This PVA film was fixed at a distance of 1.2 m from the pole of the above-fabricated arc-motion rubbing jig, and the length of the string was adjusted to be 2 m. Then, the metal plate was made to go and return 25 times on the PVA film in an arc motion while the rubbing cloth was being pressed against the film surface (see FIG. 26B). Further, the length of the string was stepwise shortened by 10 cm to be 1.9 m, 1.8 m ... 1.2 m. In each case, the metal plate was made to go and return 25 times in an arc motion for rubbing the PVA film

surface, whereby a PVA oriented film was formed.

< Visual evaluation of polarizing film having polygonally curved main absorption axes and that having main absorption axes oriented in arc shape in terms of main absorption axes >

The polarizing films produced in Examples 2 and 3 were observed through a reference polarizing plate (iodine/PVA polarizing plate, product of SANRITZ CORPORATION) whose main absorption axis has a known direction. In observation, the reference polarizing plate was rotated over positions of each of the polarizing films produced in Examples 2 and 3. The perpendicular directions to the polarized light absorption axis of the reference polarizing plate were recorded at the time when it was darkest, in order to examine the main absorption axes of each of the polarizing films produced in Examples 2 and 3. As a result, in the polarizing film produced in Example 2 having polygonally curved main absorption axes, the direction of its main absorption axes was found to change by 20° at a certain point. In the arc-form-oriented polarizing film produced in Example 3, its main absorption axes were found to be smoothly curved and have a radius of curvature of 1.1 m to 2.1 m.

< Evaluation of polarizing film having polygonally curved main absorption axes and that having main absorption axes oriented in arc shape in terms of orientation degrees >

Each of the polarizing films produced in Examples 2 and 3 was evaluated for orientation degree using a UV-Vis spectrometer (UV-Vis infrared spectrometer V670, product of JASCO Corporation). Specifically, the polarizing plate was placed on the light-incident side. Further, a light-shielding plate with a pin hole (3 mm) was provided on the light-incident side of a sample cell to narrow a region to be tested. In this state, the polarizing plate was measured for a polarized light absorption spectrum (in this case, arc-shape main absorption axes can be regarded as being virtually linearly oriented, since their radius of curvature is large and the tested region is small). As a result, both of the polarizing films produced in Examples 2 and 3 were found to have an orientation degree of 0.85.

(Example 4)

< Polarizing film having polygonally curved main absorption axes fabricated through attachment of polarizing films each having linearly oriented main absorption axes >

- Formation of polarizing film having linearly oriented main absorption axes -

A 10% by mass aqueous PVA124 solution (product of KURARAY CO., LTD.) (10.0 g), pure water (10.0 g), a 1% by mass aqueous boric acid solution (0.1 g) and the above-synthesized metal nanorod dispersion (1.0 g) were mixed with one another under stirring. Separately, an applicator having a thickness of 1 mm was placed on an A3 size clean A-PET base (PETMAX (trade mark), thickness: 300 μm, product of TOYOBO, CO., LTD.). The resultant mixture was applied thereon through bar coating with a coating bar (#0; with no wire), followed by drying at room temperature for 12 hours. Thereafter, the gold-silver composite metal nanorod-containing PVA layer (40 μm)-formed A-PET film was peeled off from the A-PET base to obtain a 40 μm-thick metal nanorod-containing PVA film.

The metal nanorod-containing PVA layer-formed A-PET film was 4-fold uniaxially stretched under heating at 90°C while being fixed with a stretching jig, to thereby form a polarizing film having a 20 μm-thick polarizing layer.

Similar to Example 1, the thus-obtained polarizing film was evaluated for an orientation degree of metal nanorods and a distribution of polarized light absorption axes. As a result, the metal nanorods were found to have an orientation degree of 0.91, and the polarized light absorption axes were found to be horizontally oriented (uniaxially oriented) as shown in FIG. 17.

- Formation of polarizing film having polygonally curved main absorption axes -

A plurality of polarizing films were attached so that main absorption axes of each polarizing film were curved as a whole of a formed polarizing film as shown in FIGs. 28A and 28B. First, the above-formed linearly oriented polarizing film was cut out (FIG. 29). The cut polarizing films were each temporarily made to adhere with pieces of tape to an intended position of a 100 μm-thick clean triacetyl cellulose (TAC) film (product of FUJIFILM Corporation). Furthermore, as shown in FIG. 30, a 2% by mass aqueous PVA124 solution was cast on an area of the TAC film which area was not provided with the polarizing films. This TAC film was covered with another clean TAC film (thickness: 100 μm), followed by lamination of the polarizing films. After drying at 70°C for 1.5 hours, there were cut off TAC film areas where no polarizing layers were provided (the areas containing those corresponding to the pieces of tape).

(Comparative Example 1)

- Formation of linearly oriented polarizing plate -

The production procedure for the linearly oriented polarizing film of Example 4 was repeated to form a linearly oriented polarizing film. The thus-formed polarizing layer was laminated on a glass plate to fabricate a polarizing plate.

(Example 5)

Four iodine/PVA polarizing plates (product of SANRITZ Co.) were attached in a manner as shown in FIG. 19 to the inner surface of the windshield of CROWN (a car manufactured by TOYOTA MOTOR CORPORATION) (1995 year's type). Here, the angle formed between the windshield and the horizontal ground is 35°. The polarizing plates were attached thereto with adhesive PD-S1 (product of PANAC Corporation). In FIG. 19, the four polarizing plates are partitioned with solid lines, and broken lines indicate main absorption axes of polarizing films. This figure illustrates the windshield of the right-steering-wheel car as viewed from the driver's sheet. Also in FIG. 19, the polarizing plate having horizontal main absorption axes is regarded as being attached to the windshield at 0°, and the other three polarizing plates are attached thereto so that main absorption axes of each plate are set at +22°, -44° and -22°, respectively (counterclockwise). In this manner, by attaching four polarizing plates to the windshield as shown in FIG. 19, as a whole, the main absorption axes of the polarizing films are virtually similar to those of one smoothly curved polarizing plate shown in FIG. 12.

Next, a lattice-patterned paper as shown in FIG. 20 was placed on the dashboard to evaluate the field of view during driving; i.e., the degree of glare from the dashboard (shadow).

The present inventor drove the car around to evaluate the field of front view (visibility) from the driver's sheet, and as a result, perceived almost no difficulties caused by glare from the dashboard.

FIG. 22 is a picture taken on the passenger's sheet side (at position -22°), and FIG. 23 is that taken on the driver's sheet side (at position 0°). These pictures indicate that the anti-glare effect in the dashboard on the passenger's sheet side is equivalent to that on the driver's sheet side.

(Comparative Example 2)

In Comparative Example 2, the procedure of Example 1 of JP-A No. 2007-334150 was repeated to form one horizontally oriented polarizing plate. And, the thus-formed polarizing plate was attached to the entire windshield as shown in FIG. 21.

Similar to Example 5, the present inventor placed a lattice-patterned paper as shown in FIG. 20 on the dashboard, and drove the car around. As a result, although the field of front view from the driver's sheet was maintained good, the driver perceived difficulties in safety confirming due to glare of the lattice-patterned paper on the dashboard when obliquely frontward confirming safe conditions (i.e., on the passenger's sheet side).

FIG. 24 is a picture taken on the passenger's sheet side (at position -22°), and FIG. 25 is that taken on the driver's sheet side (at position 0°). These pictures indicate that glare is observed on the passenger's sheet side to a more extent than on the driver's sheet side.

From Example 5 and Comparative Example 2, when main absorption axes of polarizing films are curved as shown in Example 5, glare can be prevented in a wide range from the region in front of the driver's sheet to that in front of the passenger's sheet. Notably, although four polarizing plates were attached to the windshield in Example 5, the similar results can be obtained using one windshield-size polarizing plate having almost the same curvature of main absorption axes.

(Example 6)

< Fabrication of polarizing laminated glass >

- Preparation of polyvinyl butyral (PVB) resin -

A polyvinyl butyral (PVB) resin having an acetalization degree of 65 mol% (60 g) was dissolved in xylene (1,768 g) at 25°C. Subsequently, n-butylaldehyde (95 g) was added at one time to the resultant solution, and the components were thoroughly mixed with each other under stirring for about 5 min. Then, a 35% by mass hydrochloric acid solution (115 g) was added dropwise to the resultant mixture over 15 min, followed by mixing. Thirty minutes after mixing, the reaction system was increased in temperature to 60°C over 60 min at a temperature increasing rate of 0.5°C/min to 0.6°C/min. Thereafter, this reaction system was maintained at 60°C for 3 hours, followed by extermination of reaction.

After completion of reaction, a water/methanol solution (mixing ratio = 1:1) containing sodium bicarbonate (60% by mass with respect to the resin on a solid basis) was added to the reaction mixture in a large excess amount. Thereafter, the resin was charged into a large amount of methanol for re-precipitation. The obtained precipitate was washed with water, followed by drying, to thereby form white powder of polyvinyl butyral resin.

- Formation of PVB resin film -

Triethyleneglycol-di-2-ethyl butyrate (15 g) serving as a plasticizer was added to the above-formed polyvinyl butyral resin (50 g). And, this formulation was sufficiently mixed with a mixing roll. Subsequently, dibutylhydroxytoluene (BHT) (0.08 g) serving as an antioxidant was added to the resultant kneaded product. Thereafter, a predetermined amount of the kneaded product was processed with a press-molding apparatus and maintained at 150°C for 30 min, whereby 0.38 mm-thick PVB resin films were obtained.

- Formation of polarizing film having smoothly curved main absorption axes -

The procedure of Example 1 was repeated, except that the polarizing layer was not laminated on the glass plate, to thereby form a polarizing film having smoothly curved main absorption axes.

- Fabrication of polarizing laminated glass -

The polarizing film was sandwiched between the above-obtained two PVB resin films to form a three-layered intermediate film of the layer structure PVB resin film/polarizing film/PVB resin film. In this film formation, the polarizing layer was removed from the A-PET and then sandwiched between the PVB films. Thereafter, the intermediate film was sandwiched between two square float glasses (10 cm x 10 cm, thickness: 3 mm), and the thus-sandwiched product was placed in a rubber bag. The rubber bag was degassed for 20 min until the degree of vacuum reached to 20 torr, and directly placed in an oven whose temperature was set to 90°C. The rubber bag was maintained in the oven at the same temperature for 30 min. The thus-preliminarily bonded sandwiched product obtained through vacuum pressing was placed in an autoclave and heated/pressurized at a pressure of 12 $kg/cm^2$ and at a temperature of 135°C, whereby a polarizing laminated glass was fabricated.

(Example 7)

< Fabrication of polarizing laminated glass having UV ray absorbing property >

The procedure of Example 6 was repeated, except that a UV ray absorber (TINUVIN Pwo, product of Ciba-Geigy Co.) (0.08 g) was added to the kneaded product together with BHT in the PVB resin film formation, to thereby fabricate a polarizing laminated glass having a UV ray absorbing property.

(Example 8)

< Fabrication of polarizing laminated glass having heat-ray shielding property >

- Preparation of heat-ray shielding microparticles-dispersed plasticizer -

Triethyleneglycol-di-2-ethyl butyrate (15 g) serving as a plasticizer and tin-doped indium oxide (ITO) microparticles (6 g) were charged in a horizontal microbead mill. Further, a long-chain alkyl phosphoric acid ester (0.6 g) serving as a dispersing agent was added to the mill. And, ITO microparticles were dispersed in the plasticizer to prepare a heat-ray shielding microparticles-dispersed plasticizer. The average particle diameter of ITO microparticles contained in the heat-ray shielding microparticles-dispersed plasticizer was found to be 35 nm.

- Fabrication of polarizing laminated glass having heat-ray shielding property -

The procedure of Example 6 was repeated, except that the above-prepared heat-ray shielding microparticles-dispersed plasticizer (20 g) was used instead of triethyleneglycol-di-2-ethyl butyrate (15 g) serving as a plasticizer in the PVB resin film formation, to thereby fabricate a polarizing laminated glass having a heat-ray shielding property.

< Comparison in terms of anti-glare effects >

A black paper was marked with a white marker in lattice form, and the laminated glasses produced in Examples 6 to 8 were placed on the black paper at an oblique angle of 30° with respect to the horizontal plane. The brightness of the white lattice reflected in each laminated glass was visually observed for comparison. As a result, the brightness of the laminated glass to which a UV ray absorption property or a heat ray shielding property had been imparted was the same as that of the laminated glass to which such properties had not been imparted, indicating that impartment of a UV ray absorption property or a heat ray shielding property does not degrade anti-glare effects of the laminated glass.

The polarizing plate of the present invention contains a polarizing film whose main absorption axes are oriented in a substantially arch shape and thus, realizes anti-glare effects in a wide range from a region in front of the driver's sheet to that in front of the passenger's sheet. The polarizing plate can be widely applied, for example, to glasses for various kinds of vehicles such as automobiles, electric trains, super express trains, airplanes and vessels.

## Claims

**1.** A polarizing plate comprising:

a polarizing film containing at least a polarizer,
wherein the polarizing film has a main absorption axis which is polygonally or smoothly curved.

**2.** The polarizing plate according to claim 1, wherein the main absorption axis is smoothly curved in an arch shape, and has a radius of curvature of 0.5 m to 5.0 m.

**3.** The polarizing plate according to any one of claims 1 and 2, wherein the polarizer comprises a dichroic material.

**4.** The polarizing plate according to claim 3, wherein the dichroic material is rod-like metal microparticles, and wherein the metal contained in each rod-like metal particle is any one of gold, silver, copper and aluminum.

**5.** A method for producing the polarizing plate according to any one of claims 1 to 4, comprising:

forming a coat film containing at least the polarizer, and
stretching the coat film in a width direction.

**6.** The method according to claim 5, wherein the main absorption axis of the polarizing film is oriented in an arch shape by a bowing phenomenon during the stretching.

**7.** A method for producing the polarizing plate according to any one of claims 1 to 4, comprising:

applying a polarizing film-coating liquid containing at least a UV-curable liquid crystal compound, a photoinitiator and a polarizer onto an oriented film on a base which film has been rubbed in a polygonal or arc shape, to thereby form a coated product of the polarizing film-coating liquid,
drying the coated product to form a coat layer, and
irradiating the coat layer with UV rays while being heated to a temperature at which a liquid crystal phase develops.

**8.** A method for producing the polarizing plate according to any one of claims 1 to 4, comprising:

arranging a plurality of polarizing films each having a linearly oriented main absorption axis so that the linearly oriented main absorption axes of the polarizing films are polygonally curved as a whole.

**9.** An intermediate layer comprising:

the polarizing plate according to any one of claims 1 to 4, and
resin layers laid on both surfaces thereof.

**10.** An automobile's windshield, comprising:

a base, and
the polarizing plate according to any one of claims 1 to 4.

**11.** The automobile's windshield according to claim 10, wherein the base is a laminated glass which comprises two glass plates and an intermediate layer therebetween, and wherein the intermediate layer comprises the polarizing plate.

**12.** The automobile's windshield according to claim 11, wherein the intermediate layer is a laminate which comprises the polarizing film and a resin layer.

**13.** The automobile's windshield according to claim 12, wherein the resin layer comprises a polyvinyl acetal resin.

**14.** A method for producing an intermediate layer, the method comprising:

laminating one surface of the polarizing plate according to any one of claims 1 to 4 on a resin layer on a resin layer, and
laminating another resin layer on the other surface of the polarizing plate to form a laminate having the polarizing plate and the resin layers on the both surfaces thereof.

**15.** A method for producing an automobile's windshield, the method comprising:

laminating one surface of the polarizing plate according to any one of claims 1 to 4 on a resin layer on a resin layer,
laminating another resin layer on the other surface of the polarizing plate to form a laminate having the polarizing plate and the resin layers on the both surfaces thereof, and
sandwiching the laminate between two glass plates.

FIG. 1

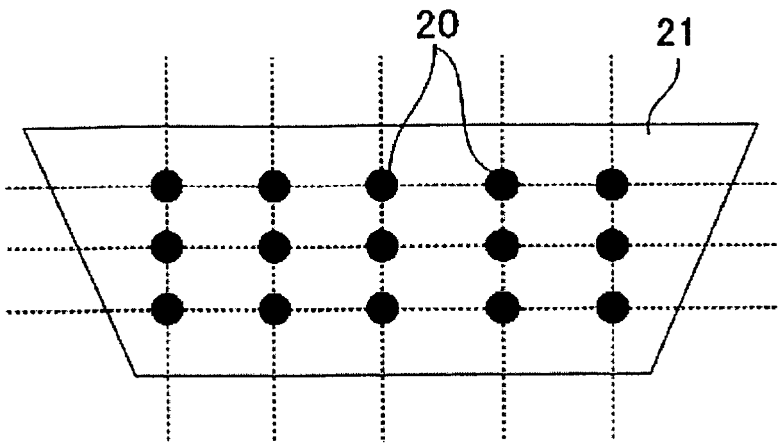


FIG. 2

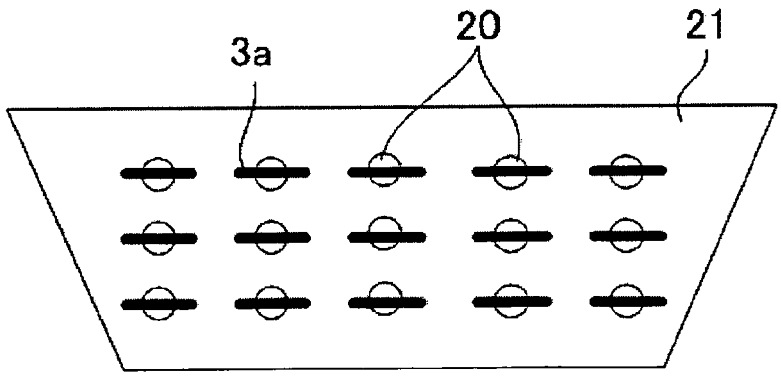


FIG. 3

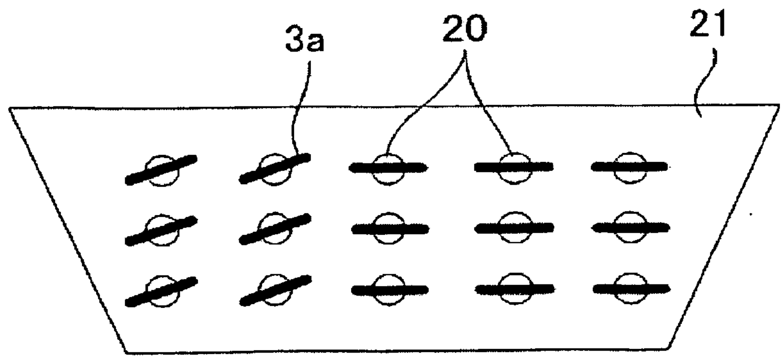

FIG. 4

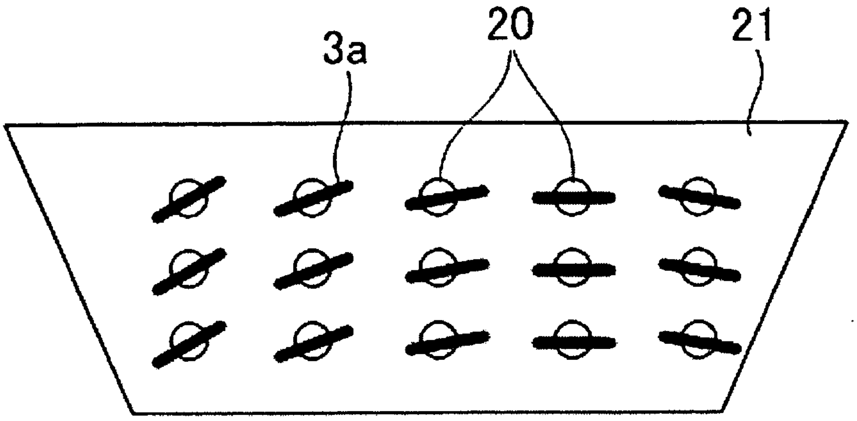


FIG. 5

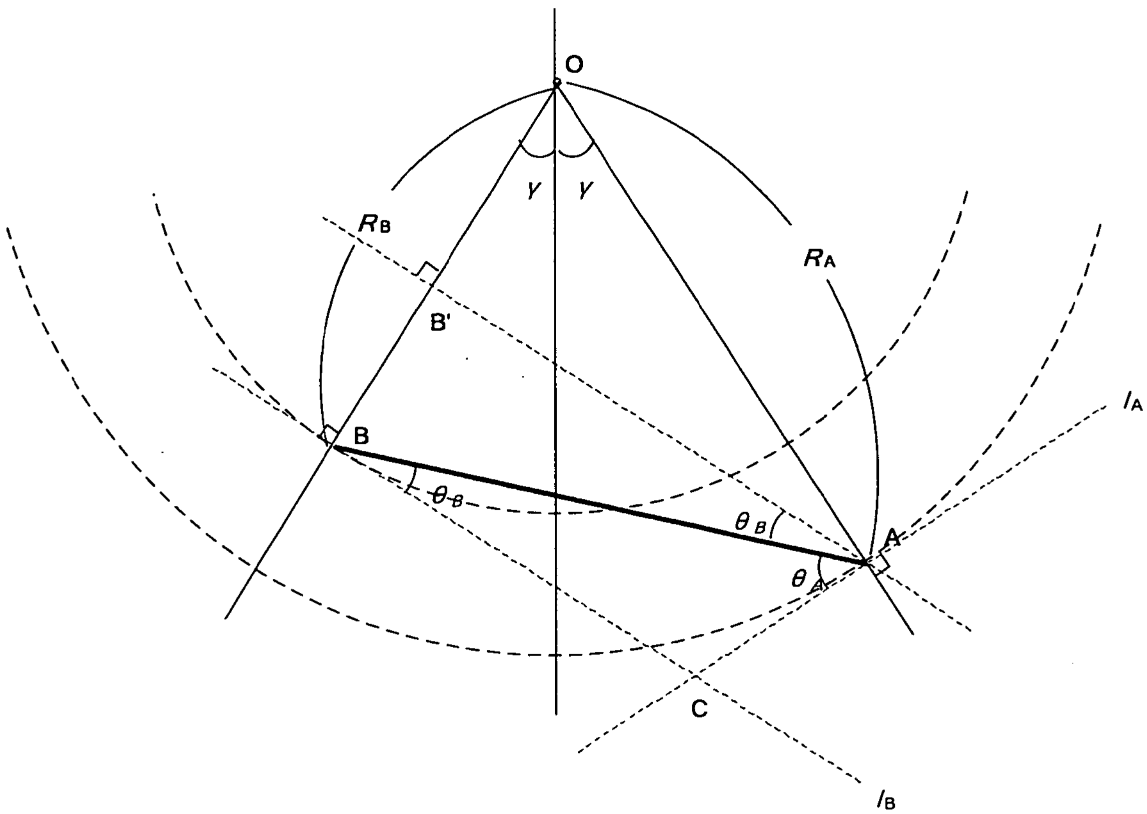

FIG. 6

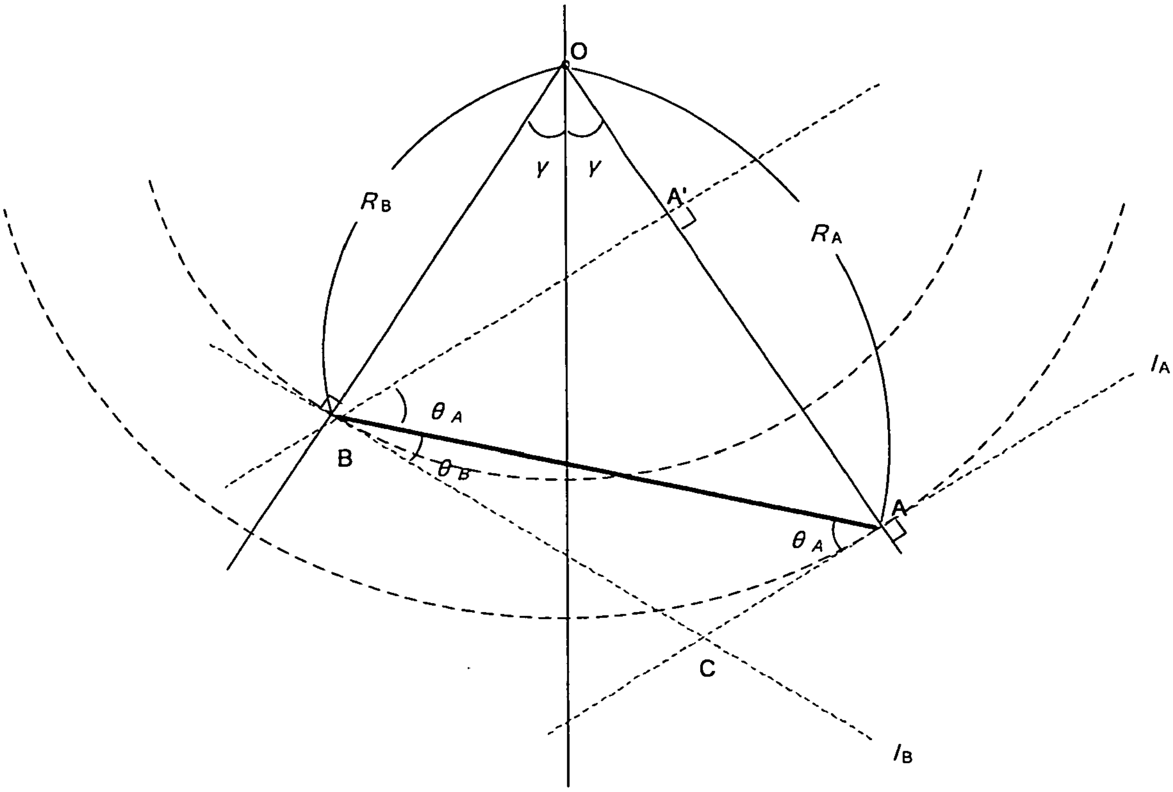

FIG. 7A

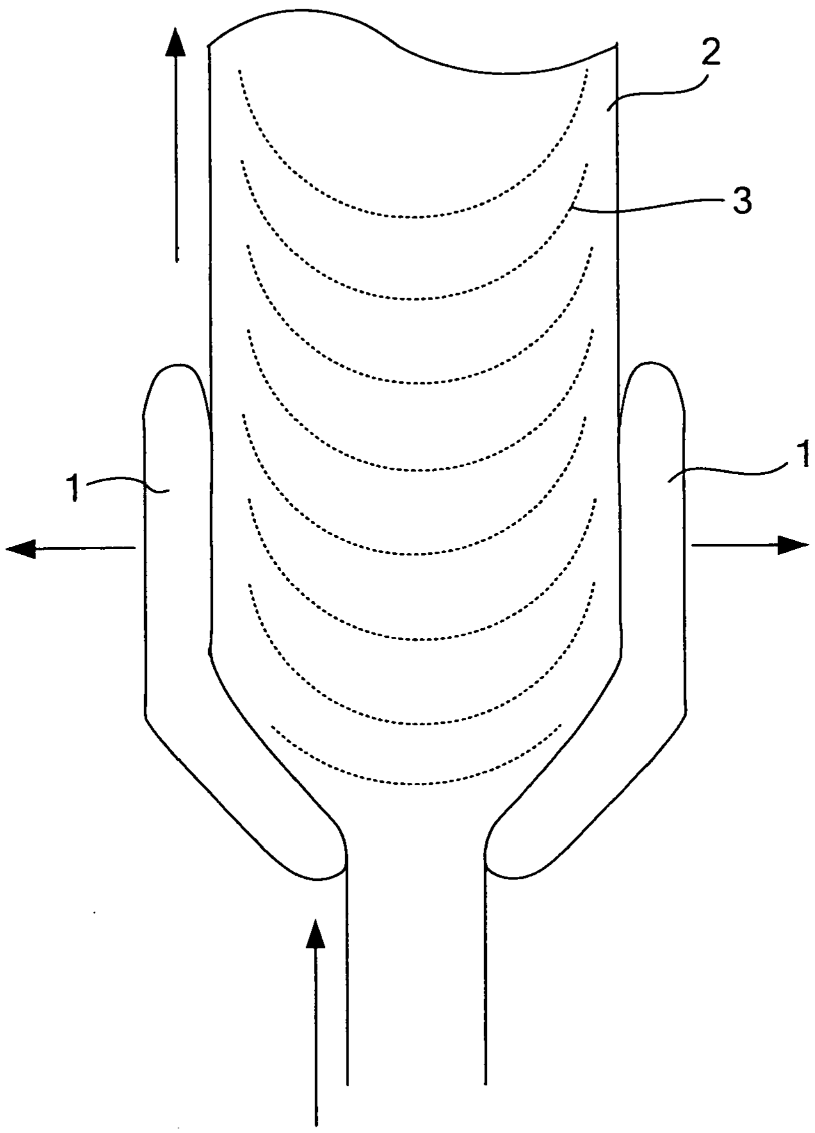

FIG. 7B

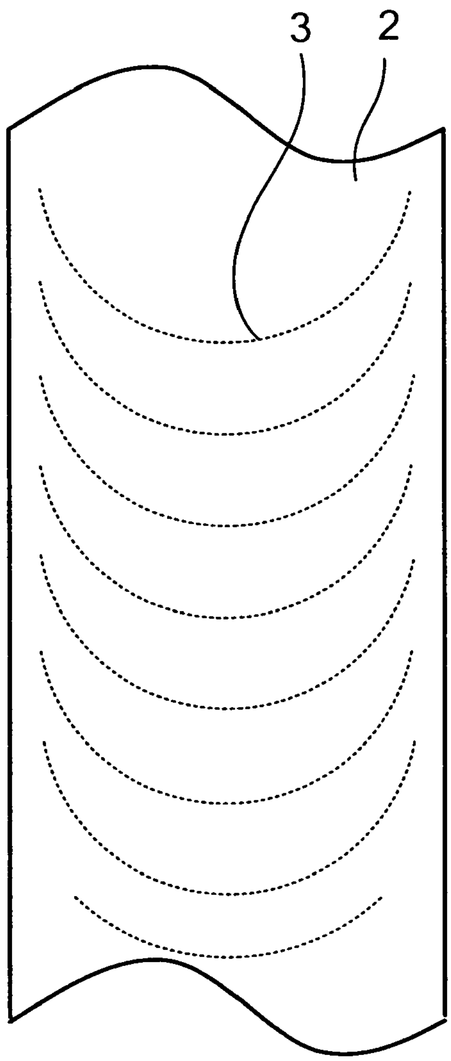

FIG. 8A

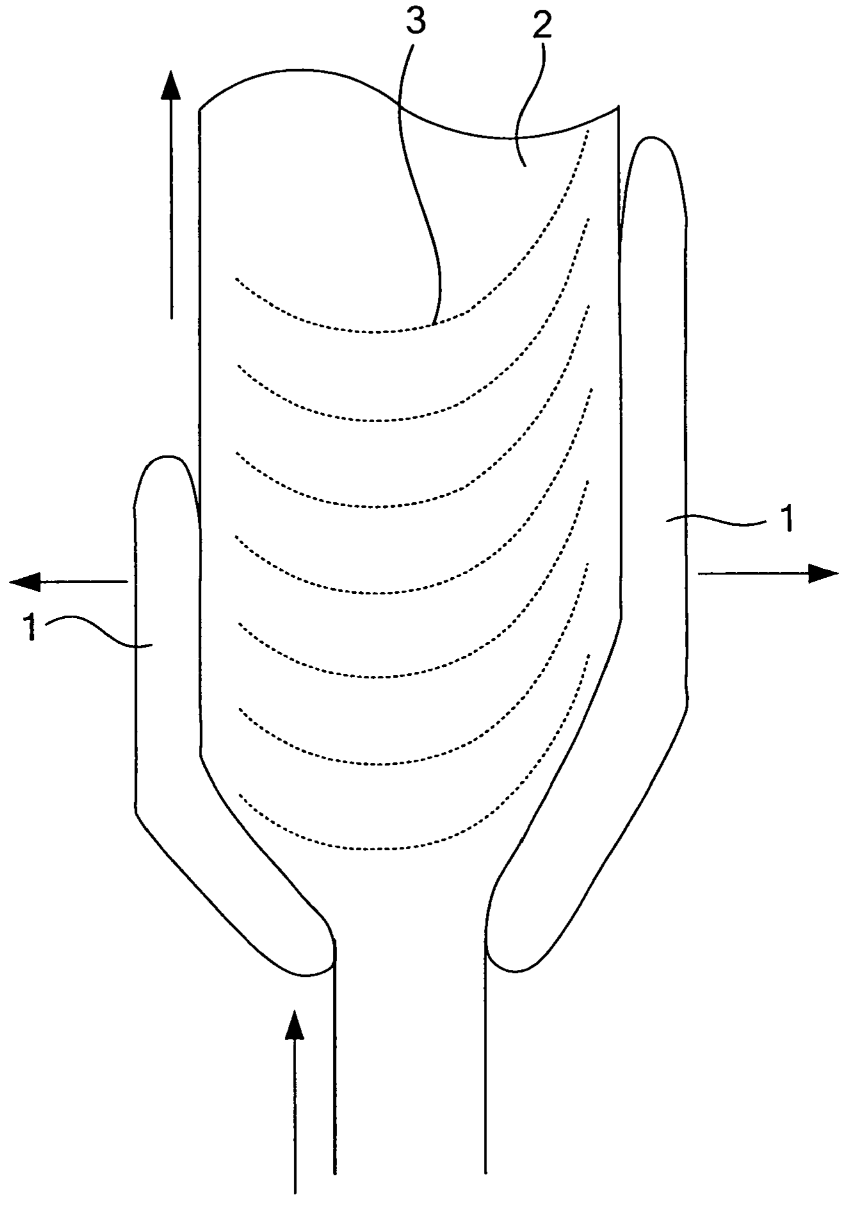

FIG. 8B

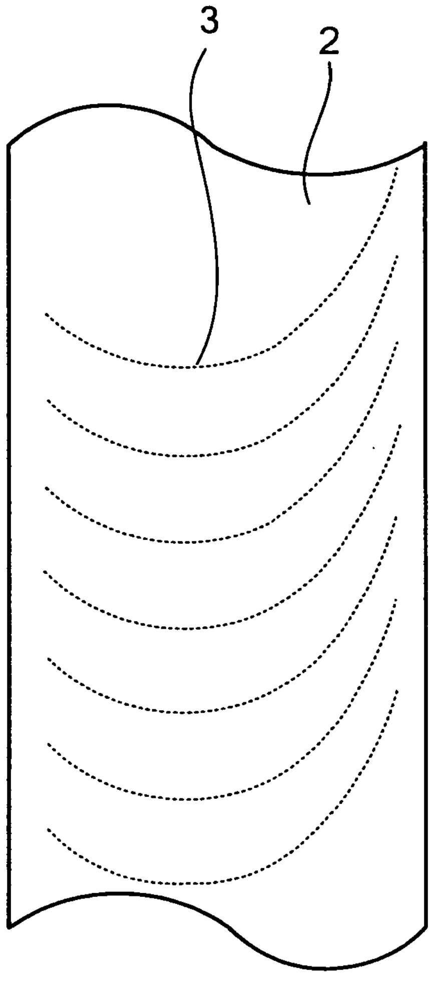

FIG. 9

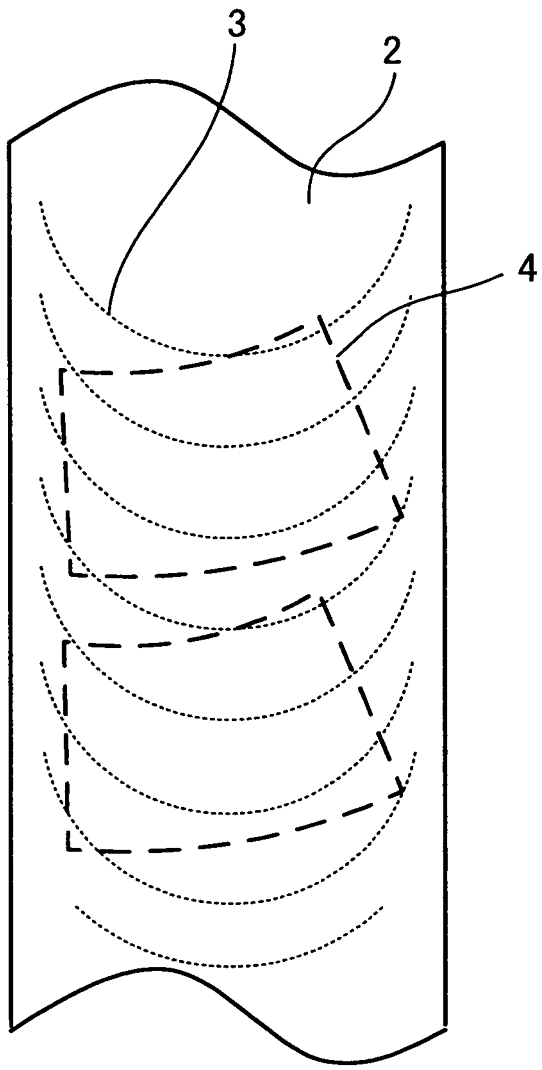

FIG. 10

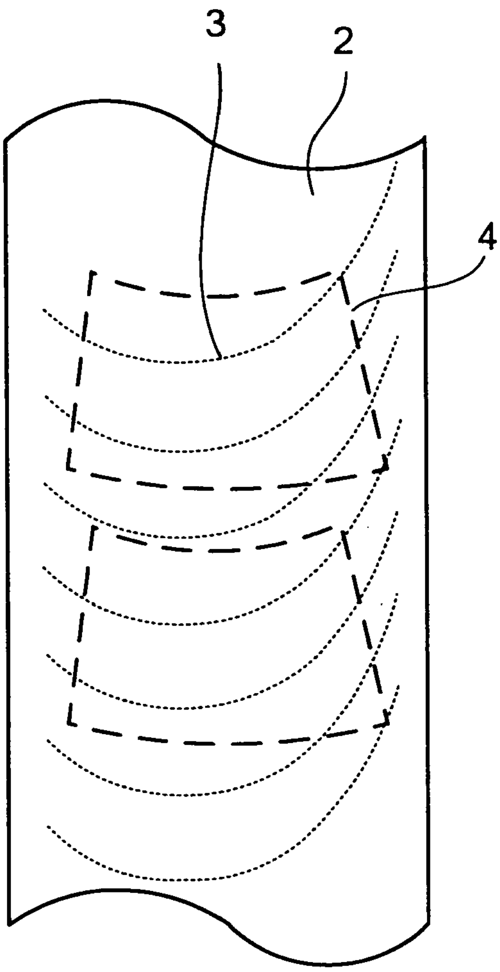

FIG. 11

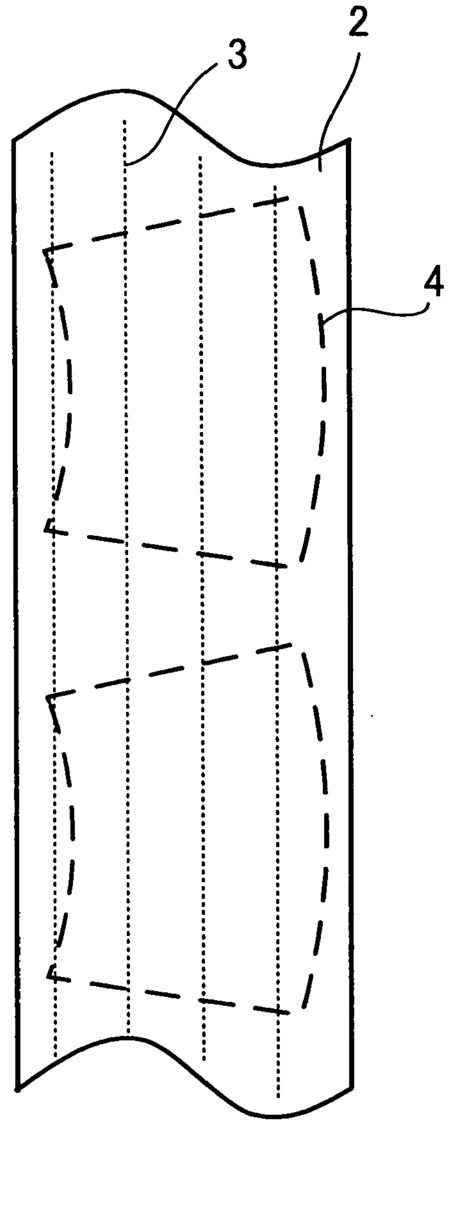

FIG. 12

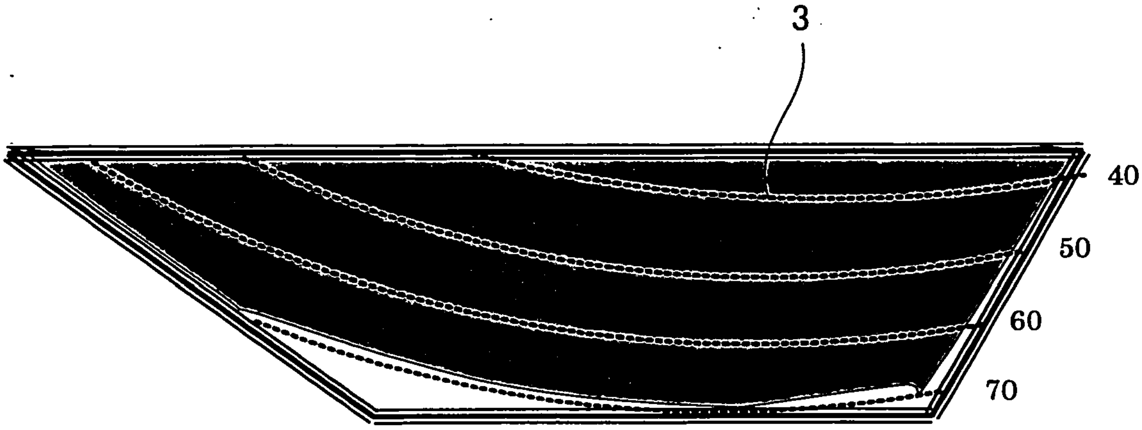


FIG. 13

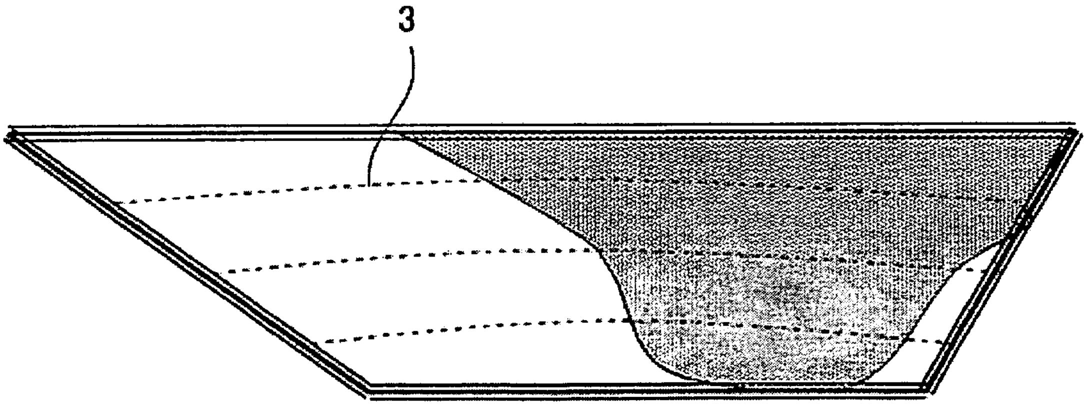

FIG. 14

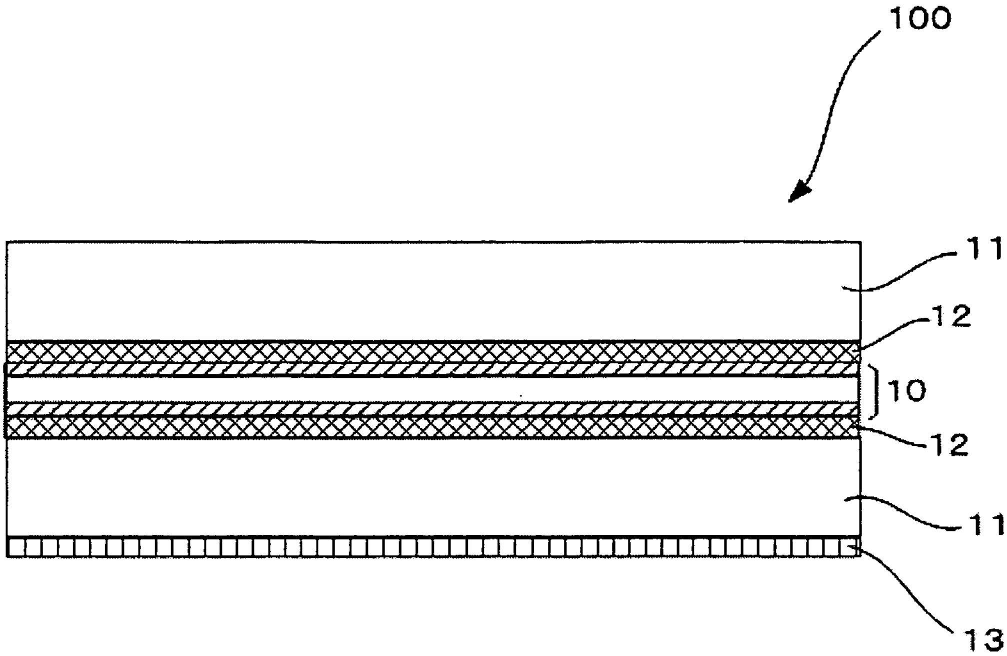


FIG. 15

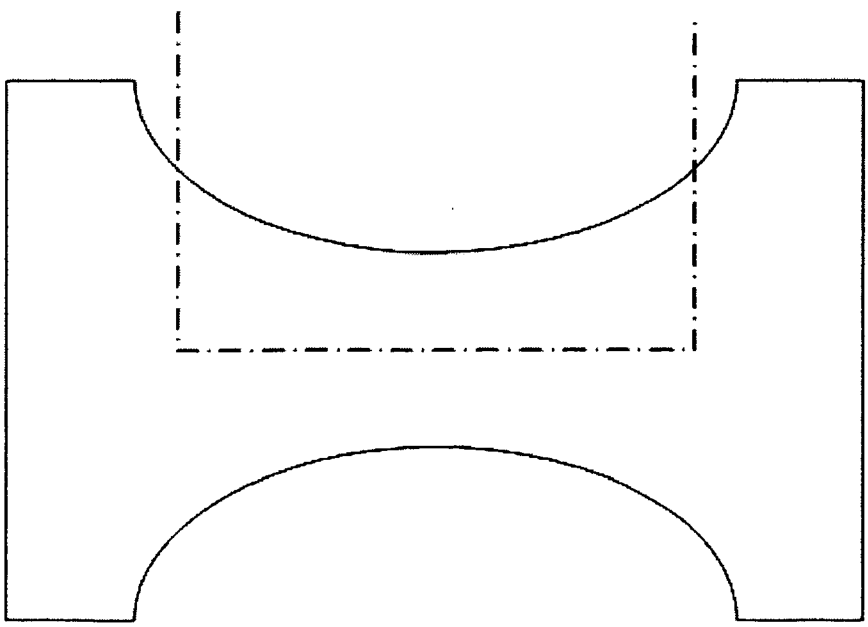

FIG. 16

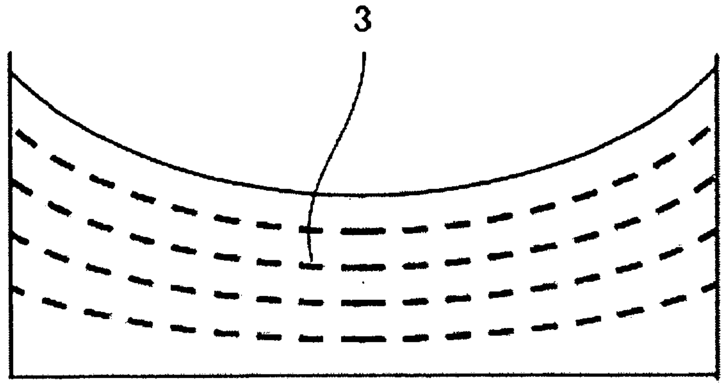


FIG. 17

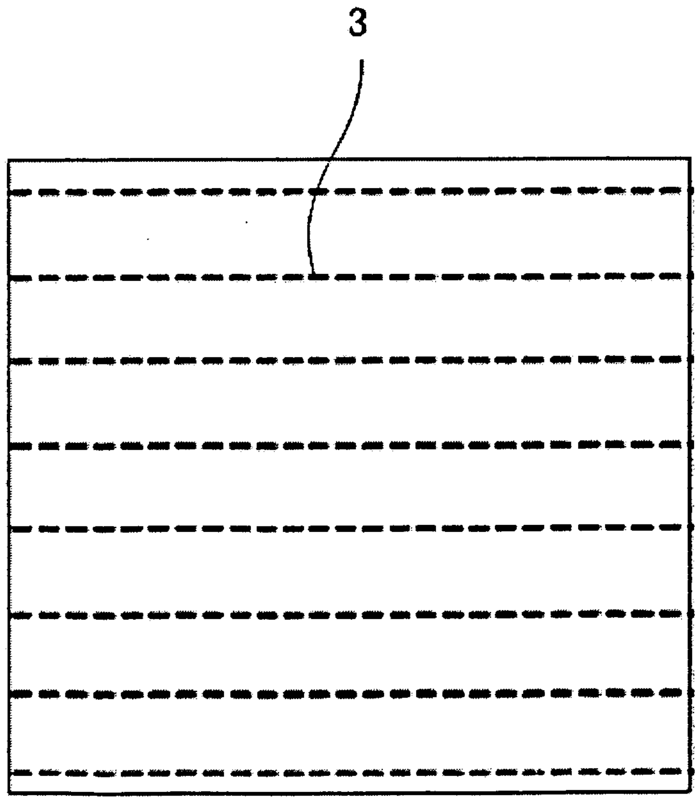

FIG. 18

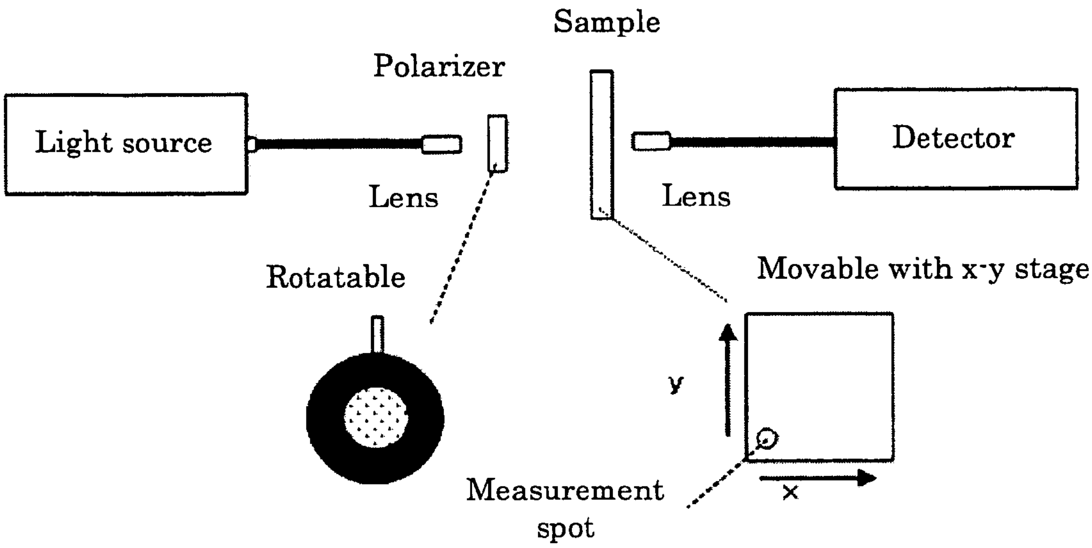
Sample
Polarizer
Light source
Detector
Lens
Lens
Rotatable
Movable with x-y stage
y
Measurement spot
x

FIG. 19

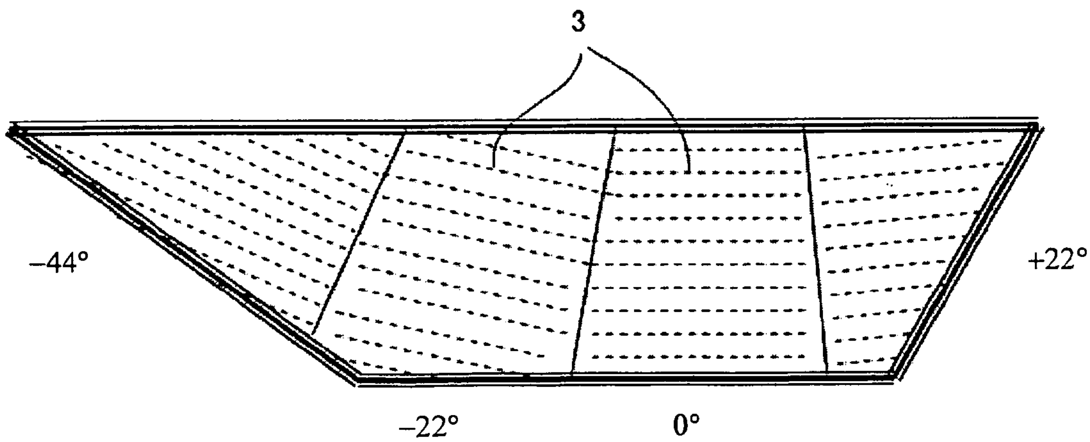
3
-44°
+22°
-22°
0°

FIG. 20

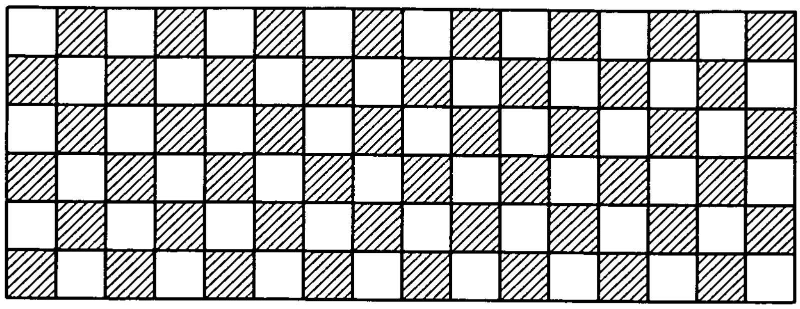

FIG. 21

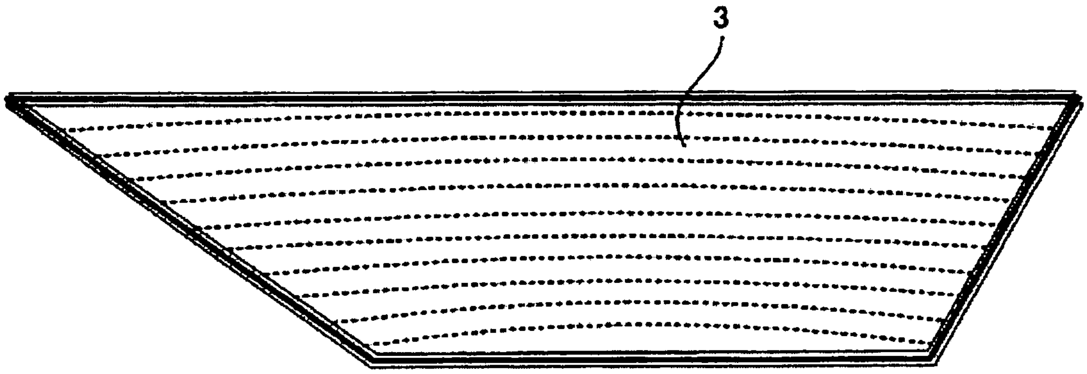

FIG. 22

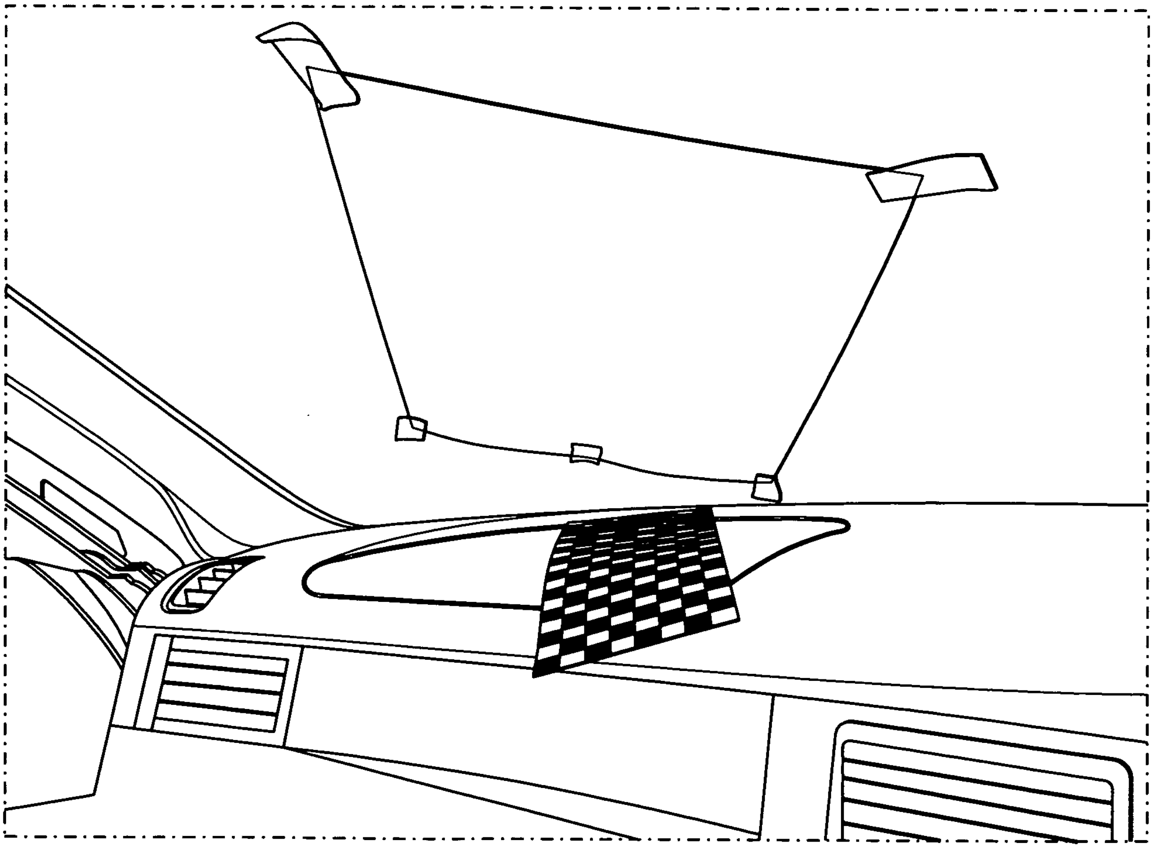

FIG. 23

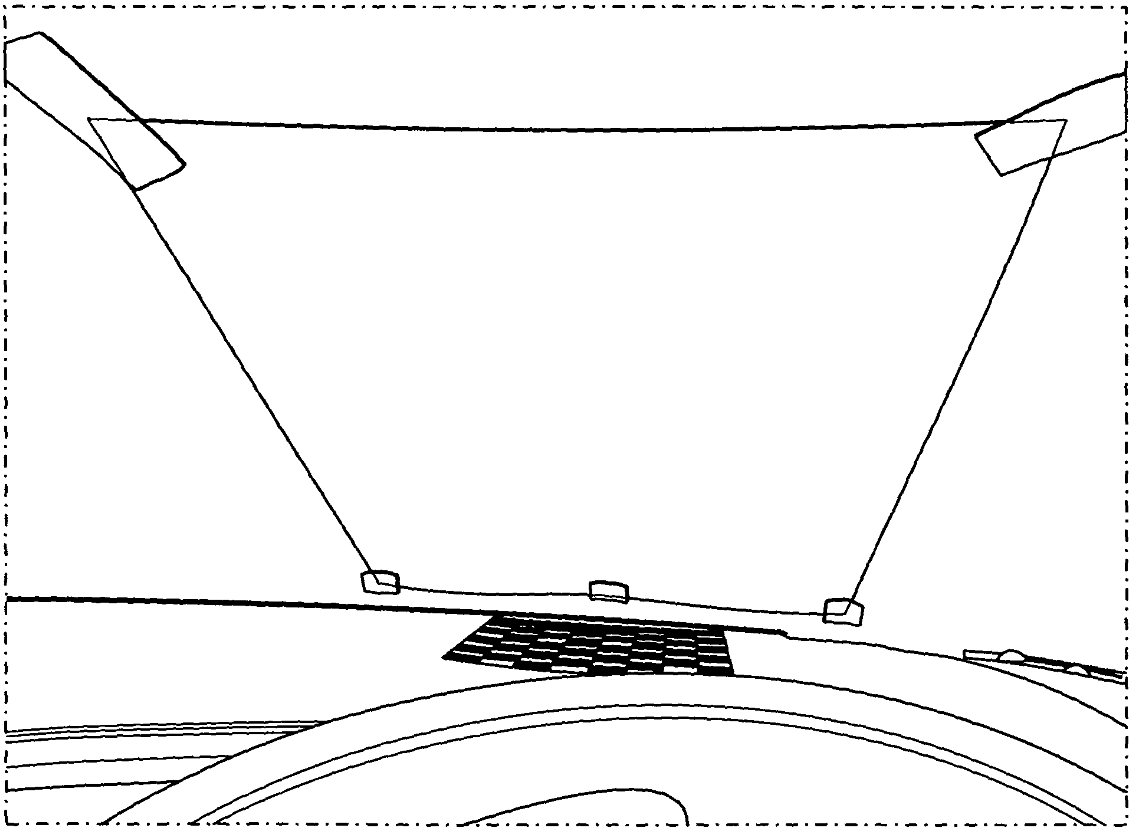

FIG. 24

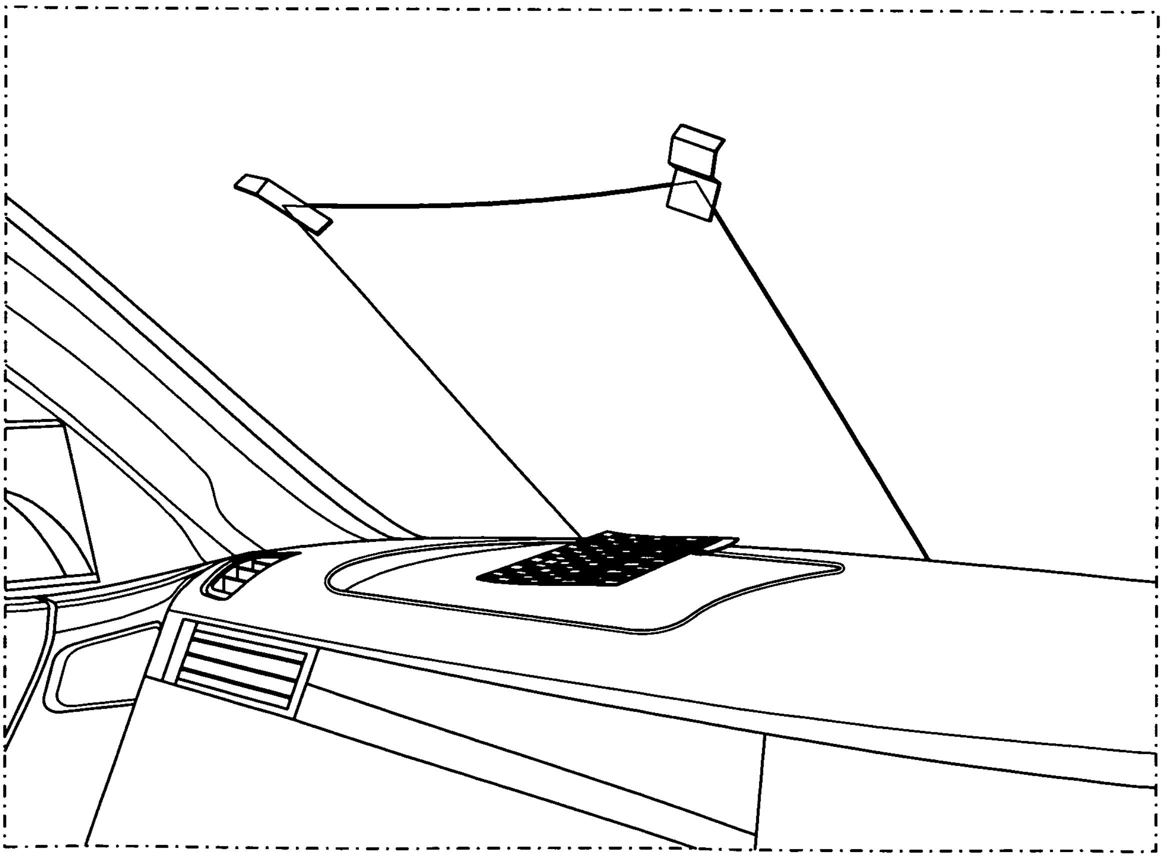

# FIG. 25

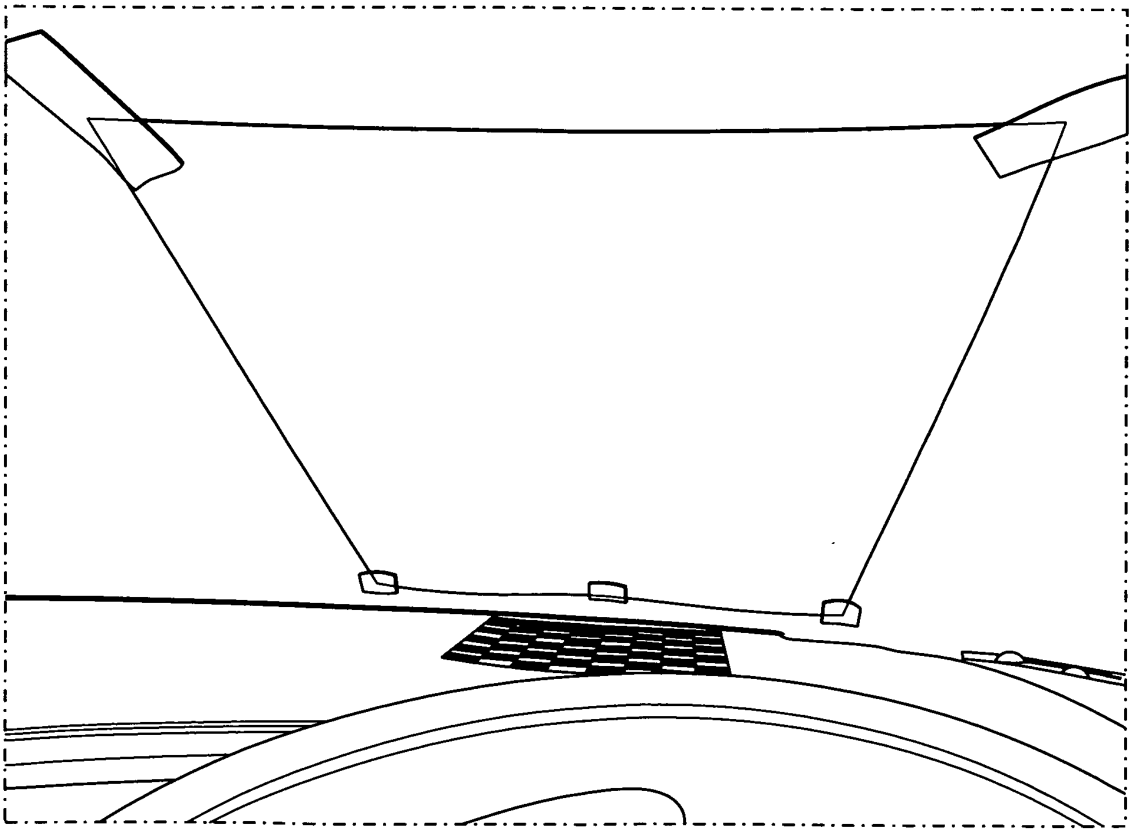

FIG. 26A

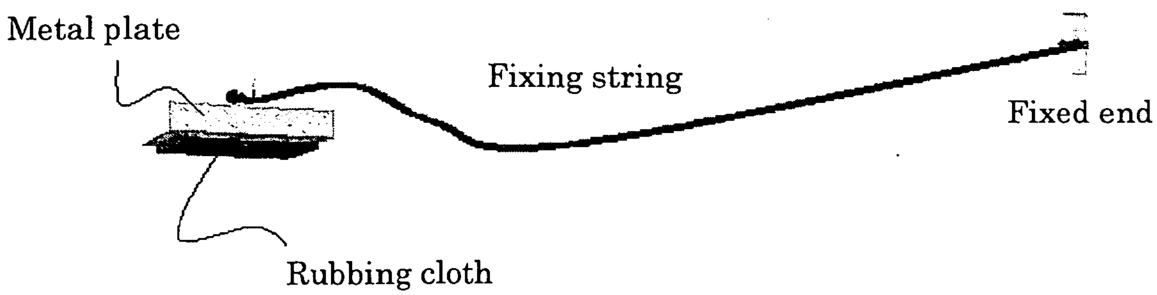


FIG. 26B

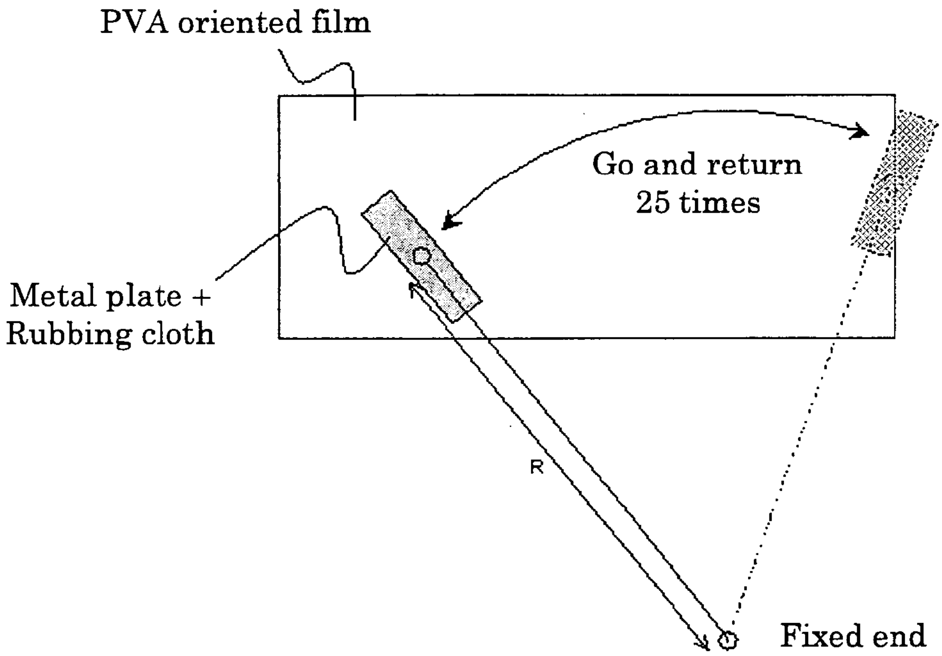

FIG. 27

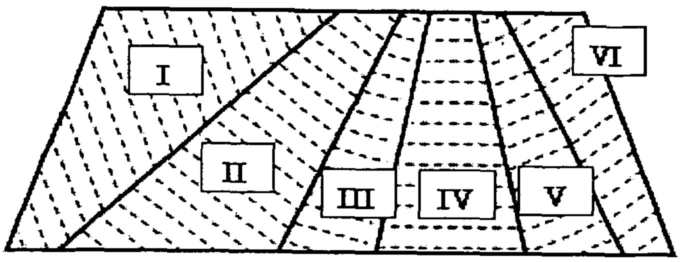


FIG. 28A

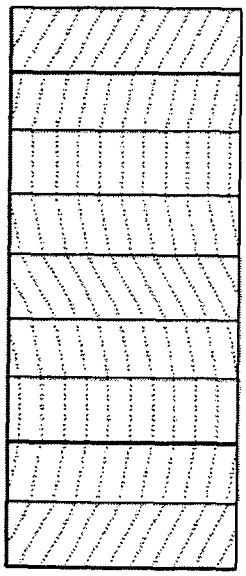

FIG. 28B

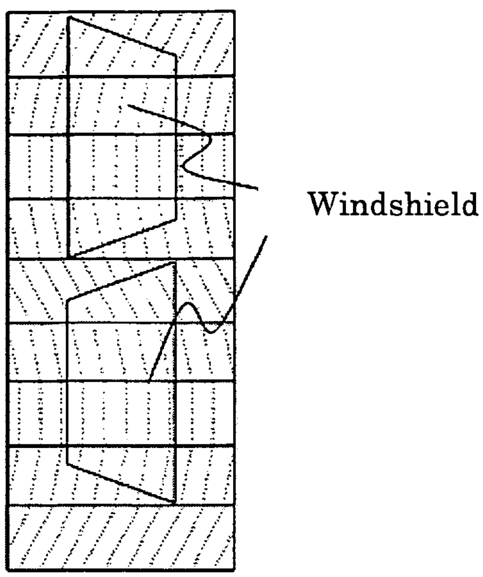

FIG. 29

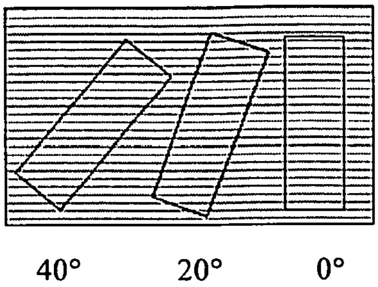
40°
20°
0°

FIG. 30

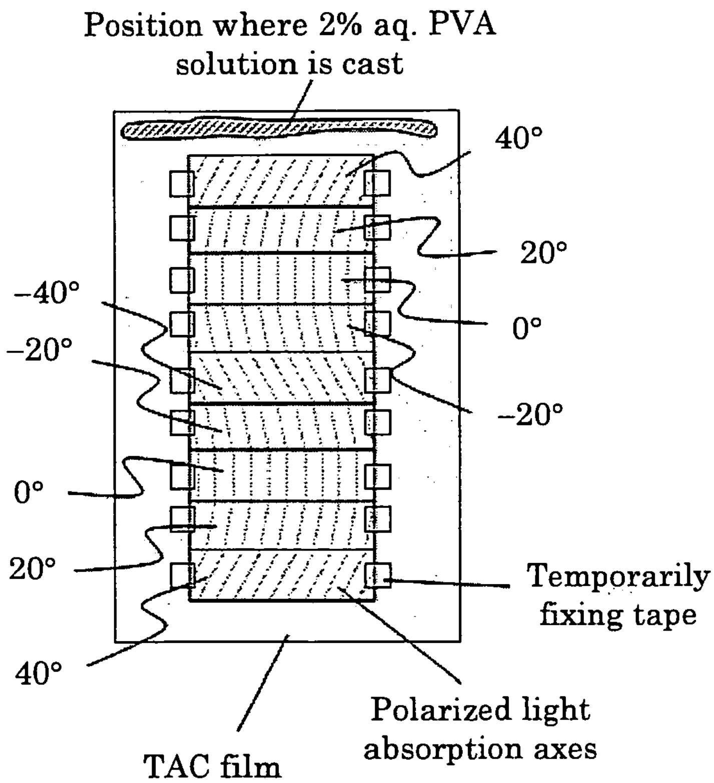
Position where 2% aq. PVA solution is cast
40°
20°
0°
-20°
-40°
-20°
0°
20°
40°
Temporarily fixing tape
Polarized light absorption axes
TAC film

Europäisches Patentamt
European Patent Office
Office européen des brevets

# EUROPEAN SEARCH REPORT

Application Number
EP 09 01 1266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | GB 570 983 A (POLAROID CORP) 1 August 1945 (1945-08-01)<br>* page 2, lines 16-50; figure 1 * | 1-2,9,14<br>3-4,7 | INV.<br>B32B17/10<br>B60J3/00<br>B60J3/06<br>G02B5/30 |
| X | JP 61 135827 A (SUZUKI SHUNKICHI; KIDACHI TAKAO) 23 June 1986 (1986-06-23)<br>* abstract * | 1,10-13,15 | |
| X | US 2 612 079 A (JOSEPH MAHLER) 30 September 1952 (1952-09-30)<br>* column 2, line 59 - column 4, line 59; figures 1,6 * | 1,5-6 | |
| X | DE 43 30 708 A1 (NABWANI YOSIF [DE]) 16 March 1995 (1995-03-16)<br>* column 3, lines 38-47; figure 1 * | 1,8 | |
| Y | US 2008/160287 A1 (MISAWA HIROAKI [JP] ET AL) 3 July 2008 (2008-07-03)<br>* paragraphs [0028] - [0059] * | 3-4 | TECHNICAL FIELDS SEARCHED (IPC) |
| Y | US 2007/091239 A1 (TAZAKI KEIKO [JP] ET AL) 26 April 2007 (2007-04-26)<br>* paragraphs [0034] - [0048]; figure 1 * | 7 | B32B<br>B60J<br>G02B |

The present search report has been drawn up for all claims

| Place of search | Date of completion of the search | Examiner |
|---|---|---|
| Munich | 7 January 2010 | Stemmer, Michael |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 01 1266

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2010

| Patent document cited in search report | | Publication date | Patent family member(s) | Publication date |
|---|---|---|---|---|
| GB 570983 | A | 01-08-1945 | NONE | |
| JP 61135827 | A | 23-06-1986 | NONE | |
| US 2612079 | A | 30-09-1952 | NONE | |
| DE 4330708 | A1 | 16-03-1995 | NONE | |
| US 2008160287 | A1 | 03-07-2008 | WO 2006092963 A1 | 08-09-2006 |
| US 2007091239 | A1 | 26-04-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007334150 A
- JP 2005092187 A
- JP 2007022089 A
- JP 2008037018 A
- JP 2006514110 A
- JP 2008024538 A
- JP 2006197119 A
- JP 2006531979 A
- JP 2006528948 A